(19) Europäisches Patentamt
European Patent Office
Office européen des brevets

(11) **EP 2 022 820 B1**

(12) **EUROPÄISCHE PATENTSCHRIFT**

(45) Veröffentlichungstag und Bekanntmachung des Hinweises auf die Patenterteilung:
**24.08.2016  Patentblatt 2016/34**

(51) Int Cl.:
**C08L 101/00** (2006.01)  **C08L 77/02** (2006.01)
**G02B 5/23** (2006.01)  **C08L 77/12** (2006.01)
**G02B 1/04** (2006.01)  **C08K 5/357** (2006.01)

(21) Anmeldenummer: **07113100.7**

(22) Anmeldetag: **25.07.2007**

(54) **PHOTOCHROME FORMMASSEN UND DARAUS HERGESTELLTE GEGENSTÄNDE**

PHOTOCHROME MOULDING MATERIAL AND OBJECTS MADE THEREFROM

MATIÈRE MOULABLE PHOTOCHROME ET OBJETS FABRIQUÉS À L'AIDE DE CELLES-CI

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**11.02.2009  Patentblatt 2009/07**

(73) Patentinhaber: **EMS-PATENT AG**
**7013 Domat / Ems (CH)**

(72) Erfinder:
• **Hala, Ralf**
**88161 Lindenberg (DE)**
• **Hoffmann, Botho**
**7013 Domat/Ems (CH)**
• **Lamberts, Nikolai**
**7402 Bonaduz (CH)**

(74) Vertreter: **Bremi, Tobias Hans**
**Isler & Pedrazzini AG**
**Gotthardstrasse 53**
**Postfach 1772**
**8027 Zürich (CH)**

(56) Entgegenhaltungen:
**EP-A- 0 922 731    EP-A- 1 712 581**

Bemerkungen:
Die Akte enthält technische Angaben, die nach dem Eingang der Anmeldung eingereicht wurden und die nicht in dieser Patentschrift enthalten sind.

**Beschreibung**

TECHNISCHES GEBIET

Die vorliegende Erfindung betrifft photochrome Formmassen und daraus hergestellte Gegenstände wie z.B. transparente Extrusions- oder Spritzgussteile, sowie Verfahren zur Herstellung solcher Gegenstände. Die Formmassen sind bevorzugt massegefärbt, ein Färben im Tauchbad oder über andere Einbringung/Dotierung des photochromen Farbstoffes ist aber ebenfalls möglich.

STAND DER TECHNIK

Photochrome Formmassen sind Ausgangsmaterialien, welche zur Herstellung photochromer Gegenstände wie z.B. unter Lichteinflüssen reversibel tönende Sonnenbrillengläser o.ä. verwendet werden.

Photochrom bedeutet, dass der Farbstoff durch Lichteinfluss (UV oder kurzwelliges VIS) in einen angeregten Zustand übergeführt wird, wobei der Grundzustand und der angeregte Zustand unterschiedliche Absorptionsspektren aufweisen (vgl. Definition Photochromie in: Römpp Lexikon Chemie, 10. Auflage, S. 3303, Georg Thieme Verlag, Stuttgart). In der Regel ist der angeregte Zustand intensiv gefärbt, während die Ausgangsform farblos ist. Durch thermische oder strahlungsinduzierte Rückreaktion gelangt das angeregte Farbstoffmolekül wieder in den Grundzustand.

Mit diesen Farbstoffen lassen sich lichtinduzierte variable optische Filter herstellen, indem der Farbstoff z.B. in eine Kunststoffmatrix eingebracht wird (Massefärbung) oder indem eine Beschichtung mit Farbstoff auf Glas oder Kunststoff aufgebracht wird (zum Einbau solcher Farbstoffe in Polymere Matrices vgl. z.B. J.F. Rabek in "Mechanisms of Photophysical Processes and Photochemical Reactions in Polymers, Kapitel 10, Seiten 377 - 391).

Eine wichtige Anwendung sind ophthalmische Linsen, wie z.B. Sonnenbrillenlinsen oder -gläser, welche bei Sonneneinstrahlung selbständig dunkler werden. Damit diese Linsen den gewünschten Farbton erhalten, werden mehrere photochrome Farbstoffe und/oder ein oder mehrere inerte Farbstoffe zusammen mit dem photochromen verwendet. Bei Verwendung eines inerten Farbstoffes besitzt die Linse bereits im unbestrahlten Zustand eine Grundtönung oder Färbung, die die Transmission reduziert.

Ein wesentlicher Aspekt bei solchen Anwendungen ist, dass der reversibel photochrome Vorgang möglichst oft wiederholbar ist und der Farbstoff nicht durch Umwelteinflüsse (z.B. Sauerstoff) oder Nebenreaktionen (z.B. mit der Polymermatrix oder Additiven) unwiederbringlich aus diesem Kreislauf entfernt wird. Weiterhin ist Voraussetzung, dass der sogenannte Schaltvorgang (Anregung) und/oder die thermische Rückreaktion überhaupt innerhalb einer vertretbaren Zeitspanne so gut wie vollständig abläuft. Ist dies nicht gegeben, tönt sich die Linse bei Lichteinwirkung nicht (keine Reduktion der Transmission), und/oder die Linse behält ihre Tönung nach der Lichteinwirkung noch lange bei. Beides ist unerwünscht.

Bereits 1980 kamen erste photochrome Kunststofflinsen auf den Markt. Bis eine ausreichende Lebensdauer und ein zufriedenstellendes spektrales Verhalten des photochromen Systems erreicht wurde, mussten allerdings zahlreiche Verbesserungen an den Farbstoffen und den polymeren Matrices erzielt werden. Anfänglich basierten solche Kunststofflinsen praktisch ausschliesslich auf Gusssystemen, wie z.B. Allyldiglykolcarbonat CR39, das durch Polymerisation von Bisallylcarbonaten zugänglich ist. Später kamen Linsen auf Basis von (Meth)acrylaten und Polycarbonaten hinzu, und in letzter Zeit werden vermehrt Linsen auf thermoplastischem Weg produziert, wobei häufig thermoplastische Polyurethane (TPU) zum Einsatz gelangen.

In der Folge sollen einige Offenbarungen aus der Patentliteratur generellen Zusammenhang photochrom dotierter Kunststoffe vorgestellt werden. Dabei wird bewusst nicht auf die Vielzahl von Beschreibungen von Systemen wie CR39, welche in einem Gussverfahren mit einer Vernetzung zu Linsen verarbeitet werden, eingegangen, da die vorliegende Erfindung derartige Systeme nicht umfasst.

Die JP-A-63027837 beschreibt ein photochromes System, bei welchem eine PET (Polyethylenterephthalat)-Kunststoffmatrix, welche mit einem Weichmacher (2-15 Gew.-%) versetzt ist, mit einem photochromen Farbstoff dotiert ist. Durch diese Wahl der Matrix soll die Langzeitstabilität einer derartigen Schicht, welche z.B. auf einem Nylonfilm aufgebracht sein kann, unter ständigem Licht- und Hitzeeinfluss verbessert werden.

Die JP-A-01180536 beschreibt ebenfalls ein photochromes Material, welches hitzestabil und wetterbeständig sein soll. Es besteht aus einer Kunststoffmatrix, welche aus einem transparenten Kunststoff und einem Additiv, welches ein Polymer mit einem definierten Anteil von Monomeren mit Hydroxylgruppen, z.B. PVB (Polyvinylbutyral) oder Polyvinylacetat ist, besteht. Als transparenter Kunststoff wird eine Vielzahl von möglichen Systemen, so z.B. PMMA, PC, transparentes Nylon, etc. angegeben.

Die JP-A-01024740, wie die beiden bereits genannten Schriften aus dem Bereich der getönten Fahrzeugscheiben, beschreibt einen Mehrschichtaufbau aus zwei Glasschichten mit einer Zwischenschicht, welche ein photochromes Material enthält. Als transparentes Material dieser Zwischenschicht werden mehrere Möglichkeiten angegeben, u.a. Vinylharz, Acrylharz, Polyesterharz und Polyamidharz. Als Farbstoffe werden u.a. Spirooxazine genannt, und es wird als vorteilhaft hervorgehoben, die Farbstoffverteilung spezifisch vorzunehmen.

Die WO 01/49478 beschreibt eine photochrome Linse, welche aus einem PC-Träger und einer photochrom dotierten Beschichtung aus thermoplastischem Polyurethan (TPU) besteht. Diese Beschichtung wird in einem Hinterspritz-Verfahren auf einen Rohling aus PC aufgebracht.

Die WO 2005/030856 beschreibt photochrome Systeme bestehend aus einem Kunststoff, einem photochromen Farbstoff und einem UV-Absorber. Die dem dort beschriebenen System zugesprochenen Vorteile sind kurze Schaltzeiten und eine hohe Lebensdauer. Als mögliche Matrix, das heisst Kunststoff im obigen Sinne, sind Polyamide, Polyamid-Blockcopolymere unter anderem mit Polyethersegmenten, vorgeschlagen.

Die US 2007/0045596 beschreibt einen photochrome ausgerüsteten, optischen Gegenstand wie beispielsweise eine Linse. Der photochrome Farbstoffe ist dabei in einem polymeren Acrylat eingebettet, spezifisch in einer acrylat-modifizierten dendrimeren Polymermatrix. Als acrylat-modifizierte dendrimere Polymermatrix wird eine enorme Vielzahl von Systemen angegeben, in den Beispielen werden ausschliesslich dendrimere Polyesteracrylate verwendet.

In der US 6,667,099 werden Meso- und Nanotubes aus Polymeren Materialien beschrieben, wobei als mögliche Materialien für die Röhren eine grosse Liste von Möglichkeiten angegeben wird. In den Beispielen werden anschliessend als Materialien Poly(p-Xylol), Polyimid, Aluminium und Silizium ausdrücklich aufgeführt, und am Rande wird erwähnt, dass die Hohlräume derartiger Röhren mit thermochromen oder photochromen Materialien gefüllt werden können.

Die EP 1712581 betrifft Zusammensetzungen von Färbebädern oder Funktionsbädern und Verfahren zum Tönen bzw. Färben oder Dotieren von Formteilen mit Funktionsadditiven in diesen wässerigen Tauchbädern oder Funktionsbädern. Die Formteile enthalten im wesentlichen transparente oder transluzente (Co)Polyamide. Als mögliche Materialien werden dabei Systeme wie MACM12 angegeben oder Mischungen ausschliesslich aus (Co)Polyamiden.

Die EP 0922731 offenbart Mischungen bestehend aus Polyamiden und Polyesteramiden für die Herstellung von transparenten dünnen Folien für die Nahrungsmittelverpackung.

DARSTELLUNG DER ERFINDUNG

Der Erfindung liegt demnach u.a. die Aufgabe zugrunde, ein im Vergleich zu den Materialien des Standes der Technik verbessertes photochromes Material zur Verfügung zu stellen.

Die Lösung dieser Aufgabe wird insbesondere dadurch erreicht, dass eine photochrome Polyamidformmasse bereitgestellt wird, welche wenigstens ein transparentes Polyesteramid (auch als PEA oder PESTA bezeichnet) in einem Gewichtsanteil von 70-99.99 Gew.-% und wenigstens einen photochromen Farbstoff in einem Gewichtsanteil von 0.01 - 2 Gew.-% enthält. Optional kann die photochrome Polyamidformmasse wenigstens ein weiteres Polymer beinhalten, insbesondere in einem Gewichtsanteil von 0-30 Gew.-%. Das Material kann dabei u.a. auch optional weitere Farbstoffe und/oder Additive enthalten. Bevorzugtermassen ist die Polyamidformmasse entweder nur aus einem Polyesteramid und dem photochromen Farbstoff gebildet, oder nur aus einem Polyesteramid, einem weiteren Polymer, bevorzugt einem Polyamid, und dem Farbstoff. Das Material muss dabei nicht bereits mit photochromem Farbstoff versetzt sein, es ist auch möglich, die Mischung aus Polyesteramid und weiterem Polymer vorzulegen und den Farbstoff nach oder während Herstellung eines Gegenstandes (z.B. Herstellung einer Linse in einem Spritzgussverfahren) in den Gegenstand einzubringen, z.B. in einem Tauchbad.

Vorzugsweise ist das weitere Polymer ein transparentes Polymer.

Das Polyesteramid verfügt bevorzugt mindestens über eine amorphe Phase, welche vom Ester- oder Polyesteranteil herrührt, deren Glasübergangstemperatur respektive Glasübergangspunkt höchstens 20°C ist. Diese amorphe Phase der transparenten Polyesteramide verfügt bevorzugtermassen über einen Glasübergangspunkt von weniger als 0°C, bevorzugt von weniger als -20°C. So kann eine optimale Kinetik der Photochromie erhalten werden.

Der Begriff transparentes Polyesteramid respektive transparente Formmasse oder transparentes weiteres Polymer, wie er in dieser Schrift verwendet wird, soll Polyesteramid oder weitere Polymere respektive daraus gebildete Formmassen bezeichnen, deren Lichttransmission wenigstens 80% beträgt, wenn das Polyesteramid oder die Formmasse oder das weitere Polymer (in reiner Form, d.h. ohne die oben angegebenen weiteren Bestandteile der erfindungsgemässen Formmasse) in Form eines dünnen Plättchens von 2mm Dicke vorliegt. Die Messung der Lichttransmission wird dabei auf einem UV/VIS Spektrometer der Firma Perkin Elmer im Bereich von 200 bis 800 nm an Rundplatten 70x2 mm durchgeführt. Der Transmissionswert wird für den Wellenlängenbereich zwischen 500 und 700 nm bzw. für die Wellenlänge von 600 nm angegeben. Die Rundplatten 70x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt.

Bevorzugtermassen verfügen das Polyesteramid und/oder die Formmasse also über eine Transmission von wenigstens 80%, bevorzugt von wenigstens 85%, insbesondere bevorzugt von grösser als 88%. Für optisch weniger hochwertige Bauteile, oder für Bauteile, bei welchen die photochromen Prozesse nur in Reflexion relevant sind (beispielsweise Dekorationsartikel) ist auch eine niedrigere Transparenz und sogar eine leichte Trübung möglich. In einer bevorzugten Ausführungsform hat auch das weitere Polymer eine Transmission von wenigstens 85%.

Weiterhin ist es bevorzugt, wenn das Polyesteramid und/oder die Formmasse einen Haze von höchstens 10%, bevorzugt höchstens 8%, insbesondere bevorzugt höchstens 5% aufweisen (ASTM 1003, Schichtdicke 2 mm).

Vor einigen Jahren gelang es zwar, auch amorphe Polyamide in der für optische Anwendungen erforderlichen Reinheit herzustellen, so z.B. Polyamide des Typs MACM12 wie in der DE-A-196 42 885 beschrieben und unter dem Handelsnamen Grilamid TR 90 von EMS CHEMIE, Schweiz, erhältlich, der einfache Zusatz eines photochromen Farbstoffes ist aber bei solchen reinen Systemen nicht mit befriedigenden photochromen Resultaten der daraus hergestellten Linsen möglich. Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5) kommerziell erhältlich ist. Die Ziffer 12 steht eine aliphatische lineare C12 Dicarbonsäure (DDS, Dodecandisäure), mit welcher das Diamin MACM polymerisiert ist.

Überraschenderweise zeigt es sich, dass, im Gegensatz zu den bisherigen Erfahrungen, dass bei Zufügung von photochromen Farbstoffen zu transparenten Polyamiden kein befriedigendes photochromes Verhalten resultiert, das erfindungsgemässe Material bei Verarbeitung zu photochromen Gegenständen unerwartet langlebiges, d.h. oft wiederholbares, reversibles photochromes Verhalten zeigt. Zudem gehören die bevorzugten Farbstoffe zu den beständigsten photochromen Systemen. Der Schaltvorgang (Anregung) verläuft ausserdem schnell und die thermische Rückreaktion läuft ebenfalls in einem sinnvollen Zeitraum von Sekunden bis höchstens wenigen Minuten nahezu vollständig ab.

Normalerweise zeigen nur reine, d.h. nicht als Polyesteramid vorliegende Polyamid-Materialien mit einem Glasübergangspunkt unterhalb von 100 °C ein ausgeprägtes photochromes Verhalten (so z.B. MACM36 oder PACM36, wobei PACM steht für die ISO-Bezeichnung Bis-(4-amino-cyclohexyl)-methan, welches unter dem Handelsnamen 4,4'-Diaminodidyclohexymethan als Dicykan-Typ (CAS Nr. 1761-71-3) kommerziell erhältlich ist). Diese sind aber in der Regel aufgrund ihrer mangelhaften mechanischen oder thermischen Eigenschaften ungeeignet z.B. für ophthalmische Linsenanwendungen. Die Zufügung eines weiteren Polymers zu einem transparenten (Co)Polyamid neben dem Farbstoff ist möglich. An diese Polymere resp. das resultierende Gemisch (Blend) werden aber besonders für ophthalmische Linsenanwendungen hohe Anforderungen gestellt, und normalerweise resultiert beim Beimischen eine Trübung des Blends. Die optischen Kennwerte (Transmission, Haze, Abbe-Zahl) der Mischungen (Blends) sollten aber nicht wesentlich unter jenen der reinen Polyamide liegen. Der photochrome Prozess sollte über eine gute Kinetik (Abdunkeln und Fading innerhalb von Sekunden bis wenigen Minuten, bevorzugt innerhalb von 20 - 60 Sekunden) verfügen und über eine lange Lebensdauer ablaufen. Dies ist bei den vorgeschlagenen Materialien resp. den daraus hergestellten Gegenständen der Fall. Wie bereits erwähnt, treten diese guten Eigenschaften der massegefärbten Gegenstände auch dann auf, wenn der Gegenstand aus dem Blend ohne Farbstoff gefertigt wird und der Farbstoff nach dem Urformen des Gegenstandes z.B. in einem Tauchbad eingebracht wird. Durch die Anwesenheit des optionalen weiteren Polymers neben dem transparenten Polyesteramid, aber auch im Polyesteramid alleine kann für die photochromen Farbstoffe eine Umgebung geschaffen werden, welche die meist bei der Anregung der Farbstoffe auftretenden und für die Farbänderung i.d.R. erforderlichen Konfigurations- und/oder Konformationsänderungen reversibel zulassen. Als weitere Polymere kommen beispielsweise Polyamide und/oder Copolyamide in Frage, wie sie in der DE-A-102 24 947, der DE-A-101 22 188, der CH-A-688 624 oder der EP-A-0 725 100 beschrieben sind, oder Mischungen davon. Bevorzugt werden insbesondere solche amorphen oder mikrokristallinen Polyamide, deren chemische Zusammensetzung der Zusammensetzung des Polyamid-Anteils im verwendeten Polyesteramid nahe kommt oder mit dieser übereinstimmt oder mit dieser verträglich ist. Wird beispielsweise ein Polyesteramid mit einem Hartsegment auf Basis MACM12 eingesetzt, so beruht das bevorzugte weitere Polymer ebenfalls im wesentlichen auf dem Polyamid MACM12.

Einer der Vorteile der Verwendung von Polyesteramiden als Basismaterial ist, dass im Gegensatz zu den Materialien wie CR39 oder Acrylat, welche bisher zur Herstellung von ophthalmischen Linsen verwendet wurden, und welche Materialien klassische Gussverfahren und eine dabei erfolgende Polymerisation (Vernetzung) erforderlich machten, transparente Polyesteramide oder deren Blends in einfachen Spritzgiessverfahren bei niedrigen Zykluszeiten, d.h. in kostengünstiger Massenproduktion, verarbeitet werden können. Die erfindungsgemässe Polyamidformmasse ist somit auch bevorzugtermassen nicht vernetzbar.

Ein Vorteil im Vergleich mit stark Homopolyamid/Copolyamid-lastigen Polyamidformmassen besteht in der niedrigeren Verarbeitungstemperatur, welche bei den erfindungsgemässen Polyamidformmassen im Bereich von 180-260°C liegen kann, während sie bei Polyamidformmassen mit einem Homopolyamid/Copolyamid Anteil im Bereich von wenigstens 50% in einem höheren Bereich von 240°C bis zu 320°C liegt. Des weiteren wird durch den hohen Anteil an flexiblen Polyesteramid ein Formkörper aus der vorgeschlagenen Polyamidformmasse deutlich flexibler und auch schlagzäher. Dadurch werden sie beispielsweise insbesondere geeignet für die Beschichtung einer Linse mit einer derartigen Polyesteramid-Folie mit photochromem Farbstoff. Namentlich zeigt es sich, dass die vorgeschlagenen Materialien den Schlag- und Kerbschlagzähigkeitstest nach ISO 179 bei Raumtemperatur ohne Bruch bestehen.

Gemäss einer ersten bevorzugten Ausführungsform ist die Polyamidformmasse dadurch gekennzeichnet, dass sich wenigstens ein, respektive das einzige vorhandene Polyesteramid zusammensetzt aus einem 40-95 Gew.-% ausmachenden Polyamid-Anteil und einem 5-60 Gew.-% ausmachenden Polyester-Anteil. Dabei können die Polyamid und Polyester-Einheiten als Wiederholungseinheiten im Polyesteramid statistisch, alternierend oder blockweise angeordnet sein. Die erfindungsgemässen Polyesteramide können beispielsweise in einem Verfahren und unter Verwendung von Ausgangsmaterialien hergestellt werden, wie sie in der DE 19820661C1 beschrieben sind. Bevorzugt sind hier Polyamid-Komponenten bzw. -Hartsegmente auf Basis der aliphatischen Polyamide PA6, PA66, PA69, PA610, PA1010, PA11, PA12, PA612, PA6/12, PA614, PA618 und PA636 sowie deren Copolymere.

Insbesondere bevorzugt sind aber Polyesteramide, die amorphe oder mikrokristalline Hartsegmente enthalten. Die amorphen oder mikrokristallinen Polyamid-Hartsegmente der erfindungsgemässen Polyesteramide besitzen eine zahlenmittlere Molmasse im Bereich von 500 bis 5000 g/mol, bevorzugt im Bereich von 700 bis 4000 g/mol und ganz besonders bevorzugt im Bereich von 750 bis 3000 g/mol.

Wenn ein mikrokristallines Polyamid-Hartsegment respektive Copolyamid-Hartsegment Verwendung findet, so wird bevorzugt, dass dieses mikrokristalline Polyamid-Hartsegment und/oder Copolyamid-Hartsegment eine Schmelzenthalpie im Bereich von 4-40 J/g, insbesondere im Bereich von 4 bis 25 J/g aufweist (gemessen mit Differential Scanning Calorimetry, DSC). Bevorzugtermassen handelt es sich bei mikrokristallinen Polyamid/Copolyamid-Hartsegment-Zusammensetzungen um Polyamid-Systeme, welche, in hochmolekularer Form und ohne weitere Bestandteile verarbeitet, transparente Formteile ergeben. D.h. die Dimension der Kristallite ist unterhalb der Wellenlänge des sichtbaren Lichtes. Bevorzugtermassen verfügt das mikrokristalline Polyamid-Hartsegment über eine Glasübergangstemperatur oberhalb von wenigstens 50°C, bevorzugt von mehr als 80°C und insbesondere bevorzugt von mehr als 100 °C sowie über eine Schmelztemperatur von wenigstens 120°C, bevorzugt von wenigstens 135°C und insbesondere von wenigstens 150°C.

Gemäss einer bevorzugten Ausführungsform handelt es sich beim Polyamid-Hartsegment um ein mikrokristallines Polyamid und/oder Copolyamid auf Basis eines cycloaliphatischen Diamins und/oder eines Diamins mit aromatischem Kern (z. B. MXDA oder PXDA). Bevorzugt wird dabei, dass dieses auf Basis von cycloaliphatischen Diaminen und aliphatischen Dicarbonsäuren mit 6 bis 18 Kohlenstoffatomen aufgebaut ist, wobei es sich beim cycloaliphatischen Diamin bevorzugtermassen um MACM und/oder PACM und/oder IPD (Isophorondiamin) mit oder ohne zusätzliche Substituenten, und insbesondere bevorzugt um ein Copolyamid des Typs MACM/PACM jeweils mit aliphatischen Dicarbonsäuren mit 6 bis 18 Kohlenstoffatomen wie zum Beispiel MACM12/PACM12, handelt, dies bevorzugtermassen mit einer PACM-Konzentration grösser 55 mol-%, insbesondere grösser 70 mol-%. Dabei steht MACM für die ISO-Bezeichnung Bis-(4-amino-3-methyl-cyclohexyl)-methan, welches unter dem Handelsnamen 3,3'-Diinethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische lineare Dicarbonsäure (C12 z.B. DDS, Dodecandisäure), mit welcher das Diamin MACM polymerisiert ist. PACM steht für die ISO-Bezeichnung Bis-(4-aminocyclohexyl)-methan, welches unter dem Handelsnamen 4,4'-Diaminodicyclohexylmethan als Dicykan-Typ (CAS Nr. 1761-71-3) kommerziell erhältlich ist.

Alternativ oder zusätzlich kann es sich, wie bereits erläutert, beim Polyamid-Hartsegment um ein amorphes Polyamid und/oder Copolyamid handeln, dann bevorzugtennassen mit einer Schmelzenthalpie von weniger als 4 J/g (gemessen mit Differential Scanning Calorimetry, DSC). Bevorzugtermassen verfügt das amorphe Polyamid-Hartsegment über eine Glasübergangstemperatur oberhalb von wenigstens 50°C, bevorzugt von mehr als 80 °C und insbesondere bevorzugt von mehr als 100 °C. Eine weitere bevorzugte Ausführungsform ist dadurch gekennzeichnet, dass das amorphe Polyamid- und/oder Copolyamid-Hartsegment auf Basis von aliphatischen und/oder cycloaliphatischen Diaminen ist, bevorzugt werden amorphe Polyamide des Typs MACMI/12, wobei der Gehalt an Laurinlactam in diesem Fall bevorzugt kleiner als 50 mol-%, insbesondere kleiner 35 mol-% ist. Dabei steht jeweils I für Isophthalsäure.

In einer weiteren Ausführungsform beruht das Polyamid-Hartsegment auf aromatischen Dicarbonsäuren mit 8 bis 18 Kohlenstoffatomen oder von aliphatischen Dicarbonsäuren mit 6 bis 36 C-Atomen oder eine Mischung solcher Homopolyamide und/oder Copolyamide handeln, bevorzugt auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das Homopolyamid- und/oder Copolyamid-Hartsegment kann vorteilhafterweise ein Polyamid sein ausgewählt aus der Gruppe: 6I6T, TMDT, 6I/MACMI/MACMT, 6I/6T/MACMI, MACMI/MACM36, 6I, lactamhaltige Polyamide wie 12/PACMI, 12/MACMI, 12/MACMT, 6/PACMT, 6/6I, 6/IPDT oder eine Mischung davon. Weitere mögliche Systeme sind: MACM6-18 oder PACM6-18, MACM6-18/PACM6-18, 6I/PACMI/PACMT oder daraus gebildete Mischungen. Die Bezeichnung der Polyamide erfolgt gemäss ISO 1874-1. Dabei steht jeweils I für Isophthalsäure und T für Terephthalsäure, TMD für Trimethylhexamethylendiamin, IPD für Isophorondiamin.

Weiter ist es vorteilhaft und möglich, dass es sich beim Homopolyamid- und/oder Copolyamid-Hartsegment um ein Polyamid auf Basis wenigstens einer Dicarbonsäure und wenigstens eines Diamins mit einem aromatischen Kern handelt, bevorzugt auf Basis von MXD (meta-Xylylendiamin), wobei die Dicarbonsäure aromatisch und/oder aliphatisch sein kann, und wobei es sich z.B. bevorzugt um 6I/MXDI handelt.

Gemäss einer weiteren bevorzugten Ausführungsform liegt das wenigstens eine transparente Polyesteramid in einem Gewichtsanteil von 80-99.9 Gew.-%, bevorzugt von 90-99.9 Gew.-%, insbesondere bevorzugt von 95-99.9 Gew.-% vor, wobei insbesondere bevorzugt nur ein einziges derartiges transparentes Polyesteramid vorliegt. Bevorzugt ist es insbesondere, wenn die Polyamidformmasse kein weiteres Polymer enthält.

Eine weitere bevorzugte Ausführungsform ist dadurch gekennzeichnet, dass das Polyesteramid eine Lösungsviskosität ($\eta_{rel}$), gemessen in m-Kresol als 0.5 Gew.-%-Lösung, bei einer Temperatur von 20°C, zwischen 1.3 und 2.5, insbesondere bevorzugt zwischen 1.4 und 2.3, aufweist. Weiterhin ist es bevorzugt, wenn das Polyesteramid ein E-Modul von weniger als 2000 MPa, bevorzugt von weniger als 1200 MPa, insbesondere bevorzugt von weniger als 500 MPa aufweist.

Bevorzugtermassen beträgt die Lösungsviskosität oder relative Viskosität des weiteren Polymeren $\eta_{rel}$ zwischen 1.3 und 2.0, insbesondere zwischen 1.40 und 1.85. Weiterhin liegt der Glasübergangspunkt $T_g$ des weiteren Polymers normalerweise oberhalb von 90°C, bevorzugt oberhalb von 110°C, insbesondere bevorzugt oberhalb von 130°C.

Das weitere Polymer kann insbesondere eine Glasübergangstemperatur oberhalb von 90°C aufweisen und eine Transmission von mehr als 80% oder mehr als 85%.

In Bezug auf das Polyesteramid werden folgende strukturelle Ausgangsmaterialien bevorzugt: transparentes Polyesteramid auf Basis von wenigstens einem Polyamid und auf Basis von wenigstens einem Polyester- und/oder Esteranteil, wobei das Polyamid auf Basis von Dicarbonsäuren und Diaminen, und/oder Lactamen und/oder Aminocarbonsäuren ausgebildet ist, und der Polyester- und/oder Esteranteil auf Basis eines Diols und einer Dicarbonsäure.

Dicarbonsäure (sowohl für Polyamid- als auch für Polyester-Anteil):

Die wenigstens eine Dicarbonsäure kann ausgewählt sein aus der folgenden Gruppe: aliphatische C4-C44-Disäure, cycloaliphatische C8-C36-Disäure, aromatische Disäure (bevorzugtermassen TPS, IPS, NDS), sowie Mischungen respektive Kombinationen davon. Bevorzugt ist die wenigstens eine Dicarbonsäure ausgewählt aus der Gruppe: Adipinsäure, Sebazinsäure, Dodekandisäure, Terephthalsäure, Isophthalsäure, Cyclohexandicarbonsäure und Mischungen davon.

Diamin:

Diamin ausgewählt aus der Gruppe: Verzweigtes oder unverzweigtes aliphatisches C4-C18-Diamin, cycloaliphatisches C8-C20-Diamin, Diamin mit aromatischem Kern (bevorzugtermassen MXDA, PXDA), Polyoxyalkylendiamine (C2-C4-Alkylene) sowie Mischungen respektive Kombinationen davon. Bevorzugt ist das wenigstens eine Diamin ausgewählt aus der Gruppe: Methylpentandiamin, Hexandiamin, Methyloktandiamin, Nonandiamin, Dekandiamin, Dodekandiamin, m-Xylylendiamin, MACM, PACM.

Lactam resp. Aminocarbonsäure:

Lactam respektive Aminocarbonsäure ausgewählt aus der Gruppe: Caprolactam, Laurinlactam, Aminocapronsäure, Aminolaurinsäure, Aminoundecansäure.

Diol:

Diol ausgewählt aus der Gruppe: aliphatisches C2-C36-Diol, cycloaliphatisches C6-C36-Diol, C8-C36-Diol mit aromatischem Kern, ethergruppenhaltiges Diol, Polycaprolacton-Diol, oder Kombinationen davon. Bevorzugt ist das Diol ausgewählt aus der Gruppe: Ethandiol, Propandiol, Butandiol, Hexandiol, Cyclohexandimethanol, C36-Dimerfettdiol, Polyoxyalkylendiole (C2-C4-Alkylen) (insbesondere mit einer Molmasse im Bereich von 200-2000 g/mol), Polycaprolacton-Diol mit einer Molmasse im Bereich von 500-3000 g/mol (insbesondere bevorzugt 750-2000 g/mol), sowie Kombinationen davon.

Werden Polyoxyalkylendiole und/oder -diamine eingesetzt, so beträgt ihre Konzentration, bezogen auf den gesamten Polyester- oder Esteranteil, das sogenannte Weichsegment, bevorzugtermassen maximal 75 Gew.-%, insbesondere maximal 50 Gew.-%.

Bevorzugter Polyamidanteil:

Das transparente PESTA ist bevorzugt ein Polyesteramid auf Basis eines Polyamid-Systems ausgewählt aus der Gruppe: PA6, PA66, PA610, PA612, PA6/12, PA11, PA12, PA MACM6-18, PA PACM6-18, MACM6-18/PACM6-18, Copolyamid unter Einbezug von 6T, 9T, 10T, und/oder 12T Einheiten, respektive Mischungen und/oder Kombinationen davon.

Bevorzugter Polyester- und/oder Esteranteil:

Das transparente PESTA ist bevorzugt ein Polyesteramid auf Basis eines Polyester- und/oder Esteranteil mit einem Polyester aus einem C36-Diol und/oder Adipinsäure und/oder Sebazinsäure und/oder C36-Dimerfettsäure und/oder Terephthalsäure.

Das weitere Polymer kann ein Polyamid auf Basis von aliphatischen und/oder cycloaliphatischen Diaminen und aliphatischen und/oder aromatischen Dicarbonsäuren mit 6 bis 40, bevorzugt mit 6-36, insbesondere bevorzugt mit 10, 12, 14 oder 18 Kohlenstoffatomen sein, oder eine Mischung solcher Homopolyamide und/oder Copolyamide. Es kann sich auch um ein Polyamid Blockcopolymeres mit Weichsegmenten handeln, und/oder ein System ausgewählt aus der folgenden Gruppe: Polyester mit Weichsegmenten; TPU-Elastomere mit Weichsegmenten; Acrylatpolymer; Methacrylatpolymer, insbesondere bevorzugt mit langen Seitengruppen; Polycarbonat-Copolymer; Styrol-Copolymer, bevorzugt auf Basis von Acrylnitril, Butadien, Acrylester, Methacrylester; Polyolefin, insbesondere gepfropftes; Ethylencopolymere, insbesondere auf Basis von Propen, Buten, Penten, Hexen, Octen, Decen, Undecen, Butadien, Styrol, Acrylnitril, Isopren, Isobutylen, Derivaten der (Meth)acrylsäure, Vinylacetat, Tetrafluorethylen, Vinylidenfluorid, Hexafluorpropen und 2-Chlorbutadien; Polyisobutylen; Polybutylacrylat sowie Kombinationen und Mischungen davon.

Grundsätzlich kann es sich, wie bei der obigen Definition angegeben, bei dem weiteren Polymer um ein mikrokristallines Polyamid oder um ein amorphes Polyamid oder um eine Mischung zweier (oder mehrerer) solcher Polyamide (oder gleichermassen der entsprechenden Copolyamide) handeln. Wenn ein mikrokristallines Polyamid respektive Copolyamid Verwendung findet, so wird bevorzugt, dass dieses mikrokristalline Polyamid und/oder Copolyamid eine Schmelzenthalpie im Bereich von 4-40 J/g, insbesondere im Bereich von 4 bis 25 J/g aufweist (gemessen mit Differential Scanning Calorimetry, DSC). Bevorzugtermassen handelt es sich bei mikrokristallinen Polyamid/Copolyamid um ein Polyamid, welches, wenn ohne weitere Bestandteile verarbeitet, transparente Formteile ergibt.

Gemäss einer bevorzugten Ausführungsform handelt es sich beim weiteren Polymer um ein mikrokristallines Polyamid und/oder Copolyamid auf Basis eines cycloaliphatischen Diamins und/oder eines Diamins mit aromatischem Kern (z. B. MXDA oder PXDA). Bevorzugt wird dabei, dass dieses auf Basis von cycloaliphatischen Diaminen und aliphatischen Dicarbonsäuren mit 6 bis 18 Kohlenstoffatomen aufgebaut ist, wobei es sich beim cycloaliphatischen Diamin bevorzugtennassen um MACM und/oder PACM und/oder IPD (Isophorondiamin) mit oder ohne zusätzliche Substituenten, und bei der als Ganzes insbesondere bevorzugt um ein Copolyamid des Typs MACM/PACM jeweils mit aliphatischen Dicarbonsäuren mit 6 bis 18 Kohlenstoffatomen wie zum Beispiel MACMI2/PACM12, handelt, dies bevorzugtermassen mit einer PACM-Konzentration grösser 55 mol-%, insbesondere grösser 70 mol-%.

Alternativ oder zusätzlich kam es sich, wie bereits erläutert, beim weiteren Polymer um ein amorphes Polyamid und/oder Copolyamid handeln, dann bevorzugtennassen mit einer Schmelzenthalpie von weniger als 4 J/g (gemessen mit Differential Scanning Calorimetry, DSC). Bevorzugtennassen verfügt das amorphe Polyamid, das als Komponente B eingesetzt wird, über eine Glasübergangstemperatur oberhalb von 90°C, bevorzugt von mehr als 110°C und insbesondere bevorzugt von mehr als 130 °C.

Eine weitere bevorzugte Ausführungsform ist dadurch gekennzeichnet, dass das weitere Polymer ein amorphes Polyamid und/oder Copolyamid auf Basis von aliphatischen und/oder cycloaliphatischen Diaminen ist, bevorzugt werden amorphe Polyamide des Typs MACMI/12, wobei der Gehalt an Laurinlactam in diesem Fall bevorzugt kleiner als 50 mol-%, insbesondere kleiner 35 mol-% ist. Dabei steht jeweils I für Isophthalsäure.

Beim weiteren Polymer kann es sich also um ein Polyamid auf Basis von aromatischen Dicarbonsäuren mit 8 bis 18 Kohlenstoffatomen oder von aliphatischen Dicarbonsäuren mit 6 bis 36 C-Atomen oder eine Mischung solcher Homopolyamide und/oder Copolyamide handeln, bevorzugt auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das (transparente) Homopolyamid und/oder Copolyamid kann vorteilhafterweise ein Polyamid sein, ausgewählt aus der Gruppe: 6I/6T, TMDT, 6I/MACMI/MACMT, 6I/6T/MACMI, MACMI/MACM36, 6I, lactamhaltige Polyamide wie 12/PACMI, 12/MACMI, 12/MACMT, 6I/PACMT, 6/6I, 6/IPDT oder eine Mischung davon. Weitere mögliche Systeme sind: MACM6-18 oder PACM6-18, MACM6-18/PACM6-18, 6I/PACMI/PACMT oder daraus gebildete Mischungen.

Weiter ist es vorteilhaft und möglich, dass es sich beim weiteren Polymer um ein Homopolyamid und/oder Copolyamid auf Basis wenigstens einer Dicarbonsäure und wenigstens eines Diamins mit einem aromatischen Kern handelt, bevorzugt auf Basis von MXD (meta-Xylylendiamin), wobei die Dicarbonsäure aromatisch und/oder aliphatisch sein kann, und wobei es sich z.B. bevorzugt um 6I/MXDI handelt.

Das weitere Polymer kann ein Homopolyamid ausgewählt aus der Gruppe MACM12 (z.B. Grilamid TR 90), MACM14, MACM 18 und/oder ein Copolyamid ausgewählt aus der Gruppe MACM12/PACM12, MACM14/PACM14, MACM18/PACM18 sein und/oder ein Homopolyamid und/oder Copolyamid auf Basis von aromatischen Dicarbonsäuren mit 8 bis 18 Kohlenstoffatomen oder eine Mischung solcher Homopolyamide und/oder Copolyamide, bevorzugt auf Basis von Lactamen und/oder Aminocarbonsäuren, wobei es sich bei den aromatischen Dicarbonsäuren bevorzugt um TPS (Terephthalsäure) und/oder IPS (Isophthalsäure) handelt. Der Brechungsindex solcher Systeme ist bevorzugtermassen grösser oder gleich 1.50, die Abbe Zahl grösser oder gleich 40, die Dichte kleiner oder gleich 1.1 g/cm$^3$.

Bevorzugtermassen handelt es sich beim transparenten Homopolyamid und/oder Copolyamid als weiteres Polymer um ein Polyamid ausgewählt aus der Gruppe: 6I/6T, TMDT, 6I/MACMI/MACMT, 6I/6T/MACMI, MACMI/MACM36, 6I, 12/PACMI, 12/MACMI, 12MACMT, 12/MACMI2, 6/PACMT, 6/6I, 6/IPDT oder eine Mischung davon handelt

Generell erweist es sich als vorteilhaft, wenn das weitere Polymer, insbesondere in Form eines transparenten Homopolyamids und/oder Copolyamids, eine Lösungsviskosität ($\eta_{rel}$) zwischen 1.3 und 2.0, insbesondere bevorzugt zwischen 1.40 und 1.85, aufweist und/oder einen Glasübergangspunkt Tg oberhalb von 90°C, bevorzugt oberhalb von 110°C, insbesondere bevorzugt oberhalb von 130°C.

Der Haze und der photochrome Effekt können durch Zusatz von Polyamid-12, insbesondere von niederviskosem PA12 (Lösungsviskosität oder relative Viskosität $\eta_{rel}$ - nach DIN EN ISO 307 in 0.5 Gew.-%iger m-Kresollösung bei 20°C - zwischen 1.5 und 2.0, bevorzugt zwischen 1.6 und 1.9) verbessert werden.

Darüber hinaus ermöglicht der Zusatz von Polyamid-12 und/oder Polyamid-Oligomer eine schonendere Verarbeitung der photochromen Polyamidformmasse bzw. eine schonendere Einarbeitung des photochromen Farbstoffes in die thermoplastische Formmasse, so dass ein Abbau des empfindlichen photochromen Farbstoffes beim Extrusions- und/oder Spritzgussprozess weitgehend verhindert werden kann. Ein geeignetes Polyamid-Oligomer ist beispielsweise ein Polyamid-12-Oligomer, bevorzugtermassen mit einer gemittelten Molmasse von 1500-2500 g/mol, insbesondere bevorzugt mit überwiegend nicht kondensationsfähigen Alkylendgruppen.

Eine eventuell auftretende Angussmarkierung kann vermieden werden, wenn das Verhältnis der Lösungsviskositäten des weiteren Polymers und des Polyesteramids, kleiner 1.2, insbesondere kleiner 1.1 ist ($\eta_{rel}$ ist im Rahmen dieser Offenbarung jeweils nach DIN EN ISO 1628-1 oder DIN EN ISO 307 zu verstehen). Auch der Haze wird bei gleicher chemischer Zusammensetzung der Polymerkomponenten mit abnehmendem Verhältnis der Lösungsviskositäten beider Polymerkomponenten reduziert. Der Zusatz von Polyamid-12-Oligomer erleichtert insgesamt die Verarbeitung aufgrund der tieferen Schmelzviskosität und einer höheren Fliesslänge.

Beim photochromen Farbstoff handelt es sich normalerweise um einen Farbstoff, welcher reversibel mit UV oder kurzwelligem VIS anregbar ist, wobei es sich bevorzugt um einen Farbstoff auf Basis von Spirooxazinen handelt. Anregbar heisst, dass er durch die Anregung in einen Zustand gebracht werden kann, in welchem sich sein Absorptionsspektrum derart verändert, dass eine Absorption des sichtbaren Lichtes stattfindet, wenn der Farbstoff in der Matrix aus Polymer eingebettet ist, d.h. im erfindungsgemässen transparenten Polyesteramid und im Blend aus transparentem Polyesteramid und weiterem Polymer. Durch die Wahl der photochromen Farbstoffe und Einstellen der Konzentration lässt sich die erzielbare Filterwirkung im sichtbaren Spektralbereich in weiten Bereichen einstellen. So lässt sich eine Reduktion der ursprünglichen Transmission (in der Regel 80 - 90 %) auf 40% oder gar 10% vollständig reversibel erreichen (jeweils gemessen an planparalleler Platte von 1 bzw. 2 oder 3 mm Dicke). Dabei wird der photochromen Farbstoff in einer Konzentration im Bereich von 0.01 bis 2%, bevorzugt im Bereich von 0.05 bis 0.15%, insbesondere im Bereich zwischen 0.1 und 1% eingesetzt.

Weitere mögliche Farbstoffe, welche als photochrome Systeme eingebaut werden können, sind z.B. in Kirk-Othmer Encyclopedia of Chemical Technology Vol. 6, "Chromogenic Materials, Photochromic", Seiten 587-605, John Wiley and Sons, Inc., oder auch in: Heinz Dürr, Henri Bouas-Laurent (Eds.), Photochromism: Molecules and Systems, Elsevier 2003, beschrieben, wobei die dort beschriebenen Spirooxazine bevorzugt werden. Möglich sind insbesondere auch Systeme wie in der DE-A-36 22 871 beschrieben, wie in der WO 2005/030856 beschrieben, oder wie in der EP-A-0 313 941 beschrieben.

Die Schaltzeiten betreffend Abdunkeln (Einfärbung des Bauteils aufgrund Bestrahlung mit der Anregungswellenlänge des Farbstoffs) und Aufhellen (thermische Rückreaktion des Farbstoffs in die für den sichtbaren Wellenbereich nicht absorbierende Form) sind sehr schnell und betragen nur wenige Sekunden (5-20 Sekunden für den festgelegten Zyklus bei Raumtemperatur, vergleiche weiter unten).

Bei den genannten Additiven kann es sich um Stabilisatoren wie UV-Stabilisatoren, Hitzestabilisatoren, Radikalfänger und/oder um Verarbeitungshilfsstoffe, Weichmacher, weitere Polymere und/oder um funktionelle Additive bevorzugt zur Beeinflussung optischer Eigenschaften wie insbesondere des Brechungsindexes oder um Kombinationen oder Mischungen davon handeln. Des weiteren können die Formmassen nanoskalige Füll- und/oder Funktionsstoffe, wie zum Beispiel Schichtmineralien oder Metalloxide, die den Brechungsindex ophthalmischer Linsen erhöhen, beinhalten.

Die optische Filterung bei Brillenlinsen verfolgt zwei Funktionen. Zum einen wird die ins Auge treffende Lichtintensität reduziert und zum anderen der Zutritt von gefährlicher UV-Strahlung zum Auge verhindert. Da die meisten photochromen Farbstoffe intensive Absorptionsbanden im UV-A und UV-B Bereich besitzen, genügen bereits tiefe Konzentrationen an weiteren UV-Absorbern (UV-Blocker) wie z. B. Tinuvin 326, um eine für Brillenlinsen ausreichend hohe Absorption im UV-Bereich zu erzielen.

Des weiteren betrifft die vorliegende Erfindung einen transparenten, bevorzugt trübungsfreien Gegenstand mit wenigstens einem Bereich oder einer Schicht aus einer Polyamidformmasse, wie sie oben charakterisiert ist.

Insbesondere betrifft sie einen solchen Gegenstand für hochwertige optische Anwendungen, wobei er dann insbesondere dadurch gekennzeichnet ist, dass er bei einer Schichtdicke der Schicht aus der Polyamidformmasse von 2 mm eine Transmission von mehr als 80%, bevorzugt von mehr als 85%, in Wellenlängenbereich von 500-700 nm aufweist, und/oder einen Haze von weniger als 10 bevorzugt von weniger als 8.

Bei einem solchen Gegenstand kann es sich um eine Folie, ein Profil, ein Rohr, einen Hohlkörper oder einen optisch variablen Filter oder eine optische Linse handeln. So zum Beispiel um eine ophthalmische Linse respektive eine Folie als Beschichtung für eine derartige Linse insbesondere bevorzugt um ein Element mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen respektive jeweils als Folie zur Beschichtung eines derartigen Bauteils, oder um ein Dekorationselement oder ein Strukturelement wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

Der Gegenstand kann dabei gradientengefärbt sein und/oder eine photochrome Beschichtung aufweisen, eine Antireflexionsbeschichtung, eine Kratzschutzbeschichtung, eine optische Filterbeschichtung, eine polarisierende Beschichtung, eine Sauerstoffbarrierebeschichtung oder Kombinationen solcher Beschichtungen.

Der Bereich oder die Schicht aus der Polyamidformmasse verfügt typischerweise über einen Glasübergangspunkt oberhalb von 50°C, bevorzugt oberhalb von 80°C, insbesondere bevorzugt oberhalb von 100°C und/oder über einen Schmelzpunkt oberhalb von 120°C, bevorzugt oberhalb von 135°C, insbesondere bevorzugt oberhalb von 150°C.

Die photochromen Polyesteramid-Formmassen lassen sich direkt durch Spritzgiessen in massegefärbte Bauteile überführen. Es ist aber auch denkbar, Folien oder Einlegeteile aus den photochromen Formmassen mit transparenten Polyamid oder anderen Polymeren zu hinterspritzen. Des weiteren können auch Bauteile durch einen geeigneten Tinting- oder Thermo-Transferprozess mit den photochromen Farbstoff dotiert werden. Neben der Spritzgussverarbeitung können die erfindungsgemässen Formmassen auch durch Extrusionsverfahren zum Beispiel zu Fasern, Folien, Rohren, Profilen oder Hohlkörper verarbeitet werden.

Zudem betrifft die vorliegende Erfindung entsprechend ein Verfahren zur Herstellung eines Gegenstandes, wie er oben beschrieben wurde, das heisst auf Basis der weiter oben beschriebenen Polyesteramidformmasse. Das Verfahren ist insbesondere bevorzugt dadurch gekennzeichnet, dass eine derartige Polyamidformmasse in einem Extrusionsverfahren, einem Spritzgussverfahren oder einem Hinterspritzen zum Gegenstand geformt wird, wobei der photochrome Farbstoff ggf. in einem nachgeschalteten Tauchbadverfahren und/oder Thermotransferverfahren in die Mischung aus transparentem Polyesteramid und weiterem Polymer eingebracht werden kann, und wobei es sich beim photochromen Gegenstand auch um eine Folie handeln kann, welche auf einen Träger, bevorzugt eine optische Linse, durch Kaschieren, Laminieren oder Kleben aufgebracht werden kann.

Der photochrome Farbstoff kann zusammen mit dem Polyesteramid und dem weiteren Polymer compoundiert werden, wobei der Farbstoff in Form eines flüssigen Konzentrates mit Hilfe einer Dosierpumpe der Polymerschmelze aus Polyesteramid und weiterem Polymer zugesetzt werden kann und/oder der Farbstoff als Feststoff oder Flüssigkeit (z.B. in Lösung) auf den übrigen Komponenten aufgetrommelt wird, wobei gegebenenfalls zusätzlich noch Anrollhilfsstoffe zum Einsatz kommen können.

Zudem betrifft die vorliegende Erfindung ein Verfahren zur Herstellung eines Masse gefärbten Formteiles welches, dadurch gekennzeichnet ist, dass der Farbstoff und das Polyesteramid und/oder weitere Polymer zu einem Masterbatch mit hoher Farbkonzentration von bevorzugt bis 30% verarbeitet wird, und dieser Masterbatch in der erforderlichen Menge mit dem Polyesteramid und/oder weiteren Polymer in einem Extruder zu Granulat verarbeitet wird oder direkt in der Spritzgussmaschine in das fertige Formteil übergeführt wird.

Weitere Ausführungsformen sind in den abhängigen Ansprüchen beschrieben und in die Beschreibung eingeschlossen.

WEGE ZUR AUSFÜHRUNG DER ERFINDUNG

Die Erfindung soll anfolgend anhand von Ausführungsbeispielen erläutert werden. Die Beispiele sollen dazu dienen, aufzuzeigen, wie eine Polyamidformmasse hergestellt und z.B. zu einem Formling verarbeitet werden kann, sie sollen aber nicht dazu ausgelegt werden, den Schutzgegenstand, wie er in den angefügten Patentansprüchen definiert ist, einschränkend auszulegen.

Beispiele 1 bis 6 und Vergleichsbeispiele (VB) 1 und 2:

Zunächst wurden die Ausgangsmaterialien B1-B5 (alles PESTA-Typen) und VB1 (Polyetheramid) in einem Polymerisationprozess hergestellt. Die entsprechenden Zusammensetzungen und am polymerisierten Material gemessenen Eigenschaften sind in Tabelle 1 zusammengefasst:

Tabelle 1: Zusammensetzung und Eigenschaften der Beispiele B1 - B5 und des Vergleichsbeispiels VB1

| Beispiele / Vergleichsbeispiele | | B1 | B2 | B3 | B4 | B5 | VB1 |
|---|---|---|---|---|---|---|---|
| **Zusammensetzung** | | | | | | | |
| DDS | Gew.-% | 37.0 | 39.9 | 37.7 | 0.0 | 0.0 | 45.2 |
| MACM | Gew.-% | 24.5 | 30.8 | 21.3 | 0.0 | 0.0 | 34.8 |
| Laurinlactam | Gew.-% | 0.0 | 0.0 | 0.0 | 41.2 | 44.8 | 0.0 |
| Terephthalsäure | Gew.-% | 0.0 | 0.0 | 0.0 | 11.7 | 12.7 | 0.0 |
| Pripol 2033 | Gew.-% | 29.2 | 22.2 | 40.9 | 35.8 | 42.4 | 0.0 |
| Priplast 3197 | Gew.-% | 9.2 | 7.0 | 0.0 | 11.2 | 0.0 | 0.0 |
| Tyzor NPZ | Gew.-% | 0.1 | 0.1 | 0.1 | 0.1 | 0.1 | 0.0 |
| Elastamine RP-409 | Gew.-% | 0.0 | 0.0 | 0.0 | 0.0 | 0.0 | 20.0 |
| **Eigenschaften** | | | | | | | |
| Zahlenmittlere Molmasse (theoret.) des PA-Segmentes | g/mol | 1000 | 1500 | 75000 | 750 | 750 | 1500 |
| Rel. Viskosität | | 1.43 | 1.49 | 1.37 | 1.58 | 1.63 | 1.40 |
| COOH | mmol/kg | 5 | 34 | 10 | 30 | 20 | 103 |
| $NH_2$ | mmol/kg | 11 | 11 | 5 | 3 | 12 | 14 |
| Tg (PA-Hartsegment) | °C | 75 | 85 | 83 | 11 | 11 | 90 |
| Tm | °C | 194 | 202 | 195 | 131 | 138 | 205 |
| Hm | J/g | 6 | 13 | 9 | 21 | 24 | 15 |
| Zug-E-Modul | MPa | 230 | 240 | 100 | 60 | 80 | 1350 |
| Reissfestigkeit | MPa | 23 | 25 | 24 | 20 | 24 | 34 |
| Reissdehnung | % | 280 | 280 | 400 | 380 | 360 | 3 |
| Schlagzähigkeit 23°C | $kJ/m^2$ | o.B. | o.B. | o.B. | o.B. | o.B. | 17 |
| Schlagzähigkeit -30°C | $kJ/m^2$ | o.B. | o.B. | o.B. | o.B. | o.B. | 27 |
| Kerbschlagzähigkeit 23°C | $kJ/m^2$ | o.B. | o.B. | o.B. | o.B. | o.B. | 4 |
| Kerbschlagzähigkeit -30°C | $kJ/m^2$ | 40 | 39 | 90 | 75 | 80 | 1.6 |

Dabei werden folgende Materialien eingesetzt:

DDS              Dodekandisäure

MACM           Bis-(4-amino-3-methyl-cyclohexyl)-methan

Pripol 2033       ist ein C36-Diol (CAS-Nr. 147853-32-5), erhältlich von Uniqema

Priplast 3197     ist ein Dimerdioldimerat (CAS-Nr. 177591-08-1), hergestellt aus Dimerdiol, wie z.B. Pripol 2033, und der C36- Dimerfettsäure erhältlich von Uniqema

Tyzor NPZ       Tetra-(n-propyl)-zirkonat, erhältlich von Dupont.

Elastamine RP-409   ist ein Polyetherdiamin mit einem Molekulargewicht von circa 440 g/mol und ist erhältlich von Huntsman.

Die Ausgangsmaterialien wurden unter Vorlegung der oben angegebenen Materialien in einem Rührkessel wie folgt hergestellt:

In einer ersten Stufe wird zunächst das Polyamid-Hartsegment polykondensiert. Dazu werden die polyamidbildenden Monomere (MACM, Dodekandisäure, etc.) und Antischaum in den Reaktor vorgelegt und mit Stickstoff inertisiert. Der Reaktor wird anschliessend auf 270°C aufgeheizt und die Reaktionsmischung für 4 Stunden unter Stickstoffbeschleierung (Baroentgasung) bei einer Produkttemperatur von 260°C gerührt.

Bei den erfindungsgemässen Beispielen werden in einer zweiten Stufe die carboxylterminierten Polyamid-Hartsegmente mit Diolen und/oder hydroxylterminierten Polyestern umgesetzt. Hierzu wird eine Mischung bestehend aus Diol, Polyester und Veresterungskatalysator zur Schmelze der Polyamid-Hartsegmente (Produkttemperatur: 230 - 260°C) hinzugesetzt.

Beim Vergleichsbeispiel wird in einer zweiten Stufe das caboxylterminierte Polyamid-Hartsegment mit dem Polyetherdiamin umgesetzt. Hierzu wird das auf 150°C vorgewärmte Polyetherdiamin, gegebenenfalls zusammen mit Stabilisatoren und Kondensationsbeschleunigern, zur Schmelze der Polyamid-Hartsegmente, die eine Produkttemperatur von 230 bis 260°C aufweist, hinzugesetzt.

Dann wird der Druck im Reaktor innerhalb von 60 Minuten auf 200 mbar reduziert. Nachdem die Reaktionsmischung 30 Minuten bei diesem Druck gerührt wurde, wird der Druck innerhalb von 60 Minuten bis zu einem Enddruck von kleiner 20 mbar gesenkt. Sobald das gewünschte Drehmoment erreicht wird, wird das Vakuum gebrochen, die Polymerschmelze mit Stickstoff von 5 bar beaufschlagt und durch Düsen in ein Wasserbad ausgetragen. Die abgezogenen Stränge werden granuliert und das Granulat 24h bei 80°C getrocknet.

Die Spirooxazin-Farbstoffe (OP 14 BLUE) wurden mit Hilfe von Tween 20 (0.05 Gew.-%) auf die Granulate der transparenten Polyesteramide (B1-B5) bzw. des Polyetheramids (VB1) aufgetrommelt. Anschliessend wurden diese Mischungen auf einer Arburg Allrounder 350-90-220D Spritzgussmaschine zu Platten der Dimension 30x30x1 mm (Standardwerkzeug) und 70x2 mm (Rundplatte; poliertes Werkzeug) verarbeitet, wobei die Zylindertemperaturen zwischen 180-260°C und die Formtemperatur zwischen 20 und 60 °C lagen. Die Schneckendrehzahl betrug 150-400 Upm.

Die Zusammensetzungen der in den einzelnen Beispielen zum Einsatz kommenden photochromen Polyamidformmassen sind in der Tabellen 2 zusammengefasst.

Tabelle 2: Zusammensetzung und optische Eigenschaften der photochrom ausgerüsteten Formmassen B6 - B10 und VB2

| Beispiele / Vergleichsbeispiele | | B6 | B7 | B8 | B9 | B10 | VB2 |
|---|---|---|---|---|---|---|---|
| Zusammensetzung | | | | | | | |
| B1 | Gew.-% | 99.8 | | | | | |
| B2 | Gew.-% | | 99.8 | | | | |
| B3 | Gew.-% | | | 99.8 | | | |
| B4 | Gew.-% | | | | 99.8 | | |
| B5 | Gew.-% | | | | | 99.8 | |
| VB1 | Gew.-% | | | | | | 99.8 |
| OP14 | Gew.-% | 0.2 | 0.2 | 0.2 | 0.2 | 0.2 | 0.2 |
| Optische Eigenschaften anhand von 2 mm Platten | | | | | | | |
| Photo chromes Verhalten | | + | + | ++ | ++ | ++ | - |
| Transmission bei 600 nm im Grundzustand | % | 85 | 88 | 85 | 92 | 92 | 73 |
| Transmission bei 600 nm im angeregten Zustand | % | 30 | 32 | 25 | 20 | 22 | 51 |
| Haze im Grundzustand | % | 3.4 | 2.4 | 2.6 | 7.9 | 7.4 | 18 |

Die in der Tabelle verwendete Bewertung des photochromen Verhaltens mit den Symbolen --, -, o, + und ++ beruht auf einer qualitativen Einschätzung von Auge, wobei sich diese stützt auf die Schnelligkeit des Einfärbens und des Entfärbens (Kinetik) sowie auf die erreichbare Farbtiefe nach der Bestrahlung.

Das den Beispielen B1-B3 und dem Vergleichsbeispiel VB1 zugrundeliegende Polyamid-Hartsegment ist in hochmolekularer Form (PA MACM12) ein hoch transparenter Werkstoff (Transmission bei 600 nm > 92%), der optimal verarbeitet, einen Haze < 1% (bei 2 mm Schichtdicke) aufweist. Trotz höherem Anteil an diesem transparentem Hartsegment weist das Polyetheramid aus VB1 deutlich schlechtere Werte bezüglich der Transparenz und dem Haze auf.

Die optischen Messungen wurden auf einem Datacolor SF 600Plus Farbmessgerät durchgeführt. Zur Anregung der Farbstoffe wurde ein LED-Panel (10x8 Dioden) mit einem Emissionsmaximum von ca. 415 nm (Halbwertsbreite ca. 50 nm) verwendet, wobei eine Spannung von 27 V bei einem Strom von 0.05 Ampere angelegt wurden. Dieses Verfahren wurde gewählt, da durch diese Einstrahlung eine gleiche Wirkung in Bezug auf den photochromen Effekt erreicht wurde, wie dies bei der natürlichen Sonneneinstrahlung bei wolkenlosem Himmel am Standort der Anmelderin der Fall ist. Die spektralen Untersuchungen wurden bei einer Temperatur von 20°C durchgeführt, die Kinetik des Abdunkelns und des Fadings ist bekanntermassen temperaturabhängig.

Die Platten wurden zunächst unbestrahlt in den Strahlengang der Blitzlampe (Messmodus Transmission) gebracht und das Absorptionsspektrum zwischen 400 und 700 nm gemessen. Danach wurde die Platte mittels des LED-Panels für 30 sec bestrahlt und unmittelbar nach Entfernen der Strahlungsquelle das Absorptionsspektrum aufgenommmen. Für die hier angestellten Betrachtungen liefert das so gemessene Absorptionsspektrum die maximal erreichbare Abdunklung (Farbsättigung). Aufgrund der zum Teil sehr schnellen Rückreaktion des Farbstoffes in seine farblose Form, womit Aufhellung oder Entfärbung der Platte eintritt, liegt die so bestimmte maximale Abdunklung aber deutlich unter der real vorliegenden Sättigung, die unter Bestrahlung erreicht wurde, da bis zur eigentlichen spektralen Messung bis zu 2 Sekunden vergehen können. Es ist verständlich, dass gerade im Zustand der maximalen Abdunklung, bei der die höchste Konzentration an angeregten Farbstoffmolekülen vorliegt, auch die Rückreaktion am schnellsten erfolgt.

Um die Geschwindigkeit der Entfärbung (Fading) zu messen, wurde das Absorptionsspektrum zu verschiedenen Zeiten nach Entfernen der Strahlungsquelle aufgenommen. Die zu verschiedenen Zeitpunkten bestimmten Transmissionswerte bei einer Wellenlänge von 600 nm sind für die Beispiele B6 bis B10 sowie das Vergleichsbeispiel VB2 in der Tabelle 3 und 4 zusammengefasst.

Bei deutlich längerer Bestrahlung mit dem LED-Panel resultiert eine stärkere Abdunkelung (Sättigung) als dies in den Werten der Tabelle 3 zum Ausdruck kommt.

| Zeit (Sekunden) | Platte aus der Formmasse von Beispiel B6 | Platte aus der Formmasse von Beispiel B7 | Platte aus der Formmasse von Beispiel B8 | Platte aus der Formmasse von Beispiel VB2 |
|---|---|---|---|---|
| 0 | 30 | 32 | 25 | 51 |
| 10 | 69 | 67 | 69 | 63 |
| 20 | 75 | 74 | 74 | 67 |
| 30 | 77 | 77 | 78 | 69 |
| 60 | 78 | 79 | 80 | 72 |
| 120 | 80 | 81 | 82 | 74 |
| 240 | 81 | 83 | 84 | 75 |
| 600 | 83 | 85 | 85 | 76 |
| 1200 | 84 | 86 | 86 | 78 |
| 1800 | 85 | 87 | 86 | 79 |

| Zeit bis Abdunklung auf 20% zurückgegangen ist | 18 sec | 27 sec | 20 sec | 100 sec |
|---|---|---|---|---|

Tabelle 3: Transmission (%) bei 600 nm gemessen an Platten 30x30x1 mm in Abhängigkeit der Zeit (Fading); Platten wurden zuvor mit dem LED-Panel für 30 Sekunden bestrahlt; "0 Sekunden" stellt also die erste Messung nach Ende der Bestrahlung dar.

| Zeit (Sekunden) | Platte aus der Formmasse von Beispiel B9 | Platte aus der Formmasse von Beispiel B10 |
|---|---|---|
| 0 | 20 | 22 |
| 10 | 70 | 69 |
| 20 | 77 | 77 |
| 30 | 80 | 80 |
| 60 | 83 | 83 |
| 120 | 85 | 84 |
| 240 | 86 | 86 |
| 600 | 87 | 87 |
| 1200 | 89 | 88 |
| 1800 | 90 | 90 |
| Zeit bis Abdunklung auf 20% zurückgegangen ist | 18 sec | 19 sec |

Tabelle 4: Transmission (%) bei 600 nm gemessen an Platten 30x30x1 mm in Abhängigkeit der Zeit (Fading); Platten wurden zuvor mit dem LED-Panel für 30 Sekunden bestrahlt; "0 Sekunden" stellt also die erste Messung nach Ende der Bestrahlung dar.

Erläuterungen:

Tween 20 ist ein Polyoxyethylensorbitansäurefettester, auch Polysorbitat 20 genannt, und ist eine häufig verwendete Anrollhilfe für unterschiedliche Feststoffe.
Als photochromer Farbstoff wurde der NCC®-Farbstoff OP 14 BLUE und der Firma New Prismatic Enterprise Co., Ltd., Taiwan, verwendet.
Die relative Viskosität ($\eta_{rel}$) wurde bestimmt nach DIN EN ISO 307, in 0.5 Gew.-%iger m-Kresollösung bei einer Temperatur von 20°C.
Die Glasumwandlungstemperatur (Tg), der Schmelzpunkt (Tm) und die Schmelzwärme (Hm) wurden bestimmt nach ISO 11357-1/2.

Die Differential scanning calorimetry (DSC) wurde mit einer Aufheizrate von 20K/min durchgeführt.

Der Haze und die Transmission wurden bei 23°C mit einem Haze-Gard Plus der Firma Byk-Gardener nach ASTM D-1003 (Lichtart C) an Rundplatten 70x2 mm bestimmt.

Zug-E-Modul, Reißfestigkeit und Reißdehnung wurden nach ISO 527 mit einer Zuggeschwindigkeit von 1 mm/min am ISO-Zugstab , Norm: ISO/CD 3167, Typ A1, 170 x 20/10 x 4 mm bei Temperatur 23 °C bestimmt.

Schlagzähigkeit und Kerbschlagzähigkeit nach Charpy wurden nach ISO 179/*eU am ISO-Prüfstab, Norm: ISO/CD 3167, Typ B1, 80 x 10 x 4 mm bei Temperatur 23 °C gemessen.

Die Amino- und Carboxyl-Endgruppenkonzentrationen werden mittels einer potentiometrischen Titration bestimmt. Für die Amino-Endgruppen werden hierzu 0.2 - 1.0 g Polyamid bzw. Polyamid-Oligomer in einem Gemisch aus 50 ml m-Kresol und 25 ml Isopropanol bei 50 - 90°C gelöst und nach Zusatz von Aminocapronsäure mit einer 0.05 molaren Perchlorsäurelösung titriert. Zur Bestimmung der COOH-Endgruppen werden 0.2 bis 1.0 g der zu bestimmenden Probe je nach Löslichkeit in Benzylalkohol oder einem Gemisch aus o-Kresol und Benzylalkohol bei 100°C gelöst und nach Zugabe von Benzoesäure mit einer 0.1 molaren Tetra-n-butylammoniumhydroxidlösung titriert.

Die zahlenmittlere Molmasse der Polyamidsegmente wurde anhand nachfolgender Gleichung bestimmt:

$$m_R = \frac{(m - m_{H_2O}) * M_R}{M_n - M_R}$$

$$M_n = \frac{(m - m_{H_2O}) * M_R}{m_R} + M_R$$

$m_R$ = Menge an Regler in g
$m$ = Menge an Polyamid-bildenden Monomeren in g
$m_{H2O}$ = Menge an entstehenden Wasser in g
$M_R$ = Molmasse Regler in g/mol
$M_n$ = theoretische Blocklänge in g/mol

## Patentansprüche

1.  Polyamidformmasse enthaltend
    wenigstens ein transparentes Polyesteramid in einem Gewichtsanteil von 70-99.99 Gew.-%;
    wenigstens ein weiteres Polymer in einem Gewichtsanteil von 0-30 Gew.-%;
    wenigstens einen photochromen Farbstoff in einem Gewichtsanteil von 0.01 - 2 Gew.-%;
    sowie optional
    weitere Farbstoffe und/oder Additive
    wobei das transparente Polyesteramid, das weitere Polymer und die Formmasse eine Lichttransmission von wenigstens 80% im Bereich von 500 bis 700 nm aufweisen, wenn das Polyesteramid in reiner Form, das weitere Polymer in reiner Form, oder die Polyamidformmasse in Form eines dünnen Plättchens von 2mm Dicke vorliegen.

2.  Polyamidformmasse nach Anspruch 1, **dadurch gekennzeichnet, dass** sich wenigstens ein Polyesteramid zusammensetzt aus einem 40-95 Gew.-% ausmachenden Polyamid-Anteil und einem 5-60 Gew.-% ausmachenden Ester- und/oder Polyester-Anteil, wobei die Polyamid und Polyester-Einheiten als Wiederholungseinheiten im Polyesteramid statistisch, alternierend oder blockweise angeordnet sein können.

3.  Polyamidformmasse nach einem der vorhergehenden Ansprüche, **dadurch gekennzeichnet, dass** das Polyesteramid und/oder das weitere Polymer und/oder die Polyamidformmasse eine Transmission von wenigstens 85%, bevorzugt von grösser als 88% aufweisen, wobei das transparente Polyesteramid, das weitere Polymer respektive die Formmasse eine solche Lichttransmissionim Bereich von 500 bis 700 nm aufweisen, wenn das Polyesteramid in reiner Form, das weitere Polymer in reiner Form, oder die Polyamidformmasse in Form eines dünnen Plättchens von 2mm Dicke vorliegen.

**4.** Polyamidformmasse nach einem der vorhergehenden Ansprüche, **dadurch gekennzeichnet, dass** das Polyesteramid und/oder das weitere Polymer und/oder die Polyamidformmasse einen Haze von höchstens 10%, bevorzugt höchstens 8%, insbesondere bevorzugt höchstens 5% aufweisen, bestimmt nach ASTM 1003 bei einer Schichtdicke von 2 mm.

**5.** Polyamidformmasse nach einem der vorhergehenden Ansprüche, **dadurch gekennzeichnet, dass** das wenigstens eine transparente Polyesteramid in einem Gewichtsanteil von 80-99.9 Gew.-%, bevorzugt von 90-99.9 Gew.-%, insbesondere bevorzugt von 95-99.9 Gew.-% vorliegt, wobei insbesondere bevorzugt nur ein einziges derartiges transparentes Polyesteramid vorliegt.

**6.** Polyamidformmasse nach einem der vorhergehenden Ansprüche, **dadurch gekennzeichnet, dass** die Polyamidformmasse kein weiteres Polymer enthält.

**7.** Polyamidformmasse nach einem der vorhergehenden Ansprüche, **dadurch gekennzeichnet, dass** das Polyesteramid eine Lösungsviskosität ($\eta_{rel}$) in m-Kresol, 0.5 Gew.-%, bei 20°C zwischen 1.3 und 2.5, insbesondere bevorzugt zwischen 1.4 und 2.3, aufweist und/oder ein E-Modul von weniger als 2000 MPa, bevorzugt von weniger als 1200 MPa, insbesondere bevorzugt von weniger als 500 MPa.

**8.** Polyamidformmasse nach einem der vorhergehenden Ansprüche, **dadurch gekennzeichnet, dass** das weitere Polymer eine Glasübergangstemperatur oberhalb von 90°C aufweist und eine Transmission von mehr als 85%.

**9.** Polyamidformmasse nach einem der vorhergehenden Ansprüche, **dadurch gekennzeichnet, dass** das transparente Polyesteramid ein Polyesteramid auf Basis von wenigstens einem Polyamid auf Basis von Dicarbonsäuren und Diaminen, und/oder Lactamen und/oder Aminocarbonsäuren , und auf Basis von wenigstens einem Polyester- und/oder Esteranteil auf Basis eines Diols und einer Dicarbonsäure ist.

**10.** Polyamidformmasse nach Anspruch 9, **dadurch gekennzeichnet, dass** die wenigstens eine Dicarbonsäure ausgewählt ist aus der Gruppe: aliphatische C4-C44-Disäure, cycloaliphatische C8-C20-Disäure, aromatische Disäure, bevorzugtermassen TPS, IPS, NDS, sowie Mischungen respektive Kombinationen davon ist.

**11.** Polyamidformmasse nach Anspruch 10, **dadurch gekennzeichnet, dass** die wenigstens eine Dicarbonsäure ausgewählt ist aus der Gruppe: Adipinsäure, Sebazinsäure, Dodekandisäure, Terephthalsäure, Isophthalsäure, Cyclohexandicarbonsäure und Mischungen davon.

**12.** Polyamidformmasse nach einem der Ansprüche 9-11, **dadurch gekennzeichnet, dass** das Diamin ausgewählt ist aus der Gruppe: Verzweigtes oder unverzweigtes aliphatisches C4-C18-Diamin, cycloaliphatisches C8-C20-Diamin, Polyoxyalkylendiamine (C2-C4-Alkylene), Diamin mit aromatischem Kern, bevorzugtermassen MXDA, PXDA, sowie Mischungen respektive Kombinationen davon, wobei bei Anwesenheit von Polyoxyalkylendiaminen deren Konzentration, bezogen auf den gesamten Polyester- oder Esteranteil bevorzugtermassen maximal 75 Gew.-%, insbesondere maximal 50 Gew.-% ausmacht.

**13.** Polyamidformmasse nach Anspruch 12, **dadurch gekennzeichnet, dass** das Diamin ausgewählt ist aus der Gruppe: Methylpentandiamin, Hexandiamin, Methyloktandiamin, Nonandiamin, Dekandiamin, Dodekandiamin, m-Xylylendiamin, MACM, PACM.

**14.** Polyamidformmasse nach einem der Ansprüche 9-13, **dadurch gekennzeichnet, dass** das wenigstens eine Lactam respektive die wenigstens eine Aminocarbonsäure ausgewählt ist aus der Gruppe: Caprolactam, Laurinlactam, Aminocapronsäure, Aminolaurinsäure, Aminoundecansäure.

**15.** Polyamidformmasse nach Anspruch 9, **dadurch gekennzeichnet, dass** das transparente Polyesteramid ein Polyesteramid auf Basis eines Polyamid-Systems ist ausgewählt aus der Gruppe: PA6, PA66, PA610, PA612, PA6/12, PAH, PA12, PA MACM6-18, PA PACM6-18, MACM6-18/PACM6-18, Copolyamid unter Einbezug von 6T, 9T, 10T, und/oder 12T Einheiten, respektive Mischungen und/oder Kombinationen davon.

**16.** Polyamidformmasse nach einem der Ansprüche 9-15, **dadurch gekennzeichnet, dass** das Diol ausgewählt ist aus der Gruppe: aliphatisches C2-C36-Diol, cycloaliphatisches C6-C36-Diol, C8-C36-Diol mit aromatischem Kern, ethergruppenhaltiges Diol, Polycaprolacton-Diol, oder Kombinationen davon insbesondere bevorzugt ausgewählt aus der Gruppe: Ethandiol, Propandiol, Butandiol, Hexandiol, Cyclohexandimethanol, C36-Dimerfettdiol, Polyoxyalkylendiole (C2-C4-Alkylen), insbesondere mit einer Molmasse im Bereich von 200-2000 g/mol, Polycaprolacton-Diol mit einer Molmasse im Bereich von 500-3000 g/mol, insbesondere bevorzugt 750-2000 g/mol, sowie Kombinationen davon, wobei bei Anwesenheit von Polyoxyalkylendiolen deren Konzentration, bezogen auf den gesamten Polyester- oder Esteranteil bevorzugtermassen maximal 75 Gew.-%, insbesondere maximal 50 Gew.-% ausmacht.

17. Polyamidformmasse nach einem der Ansprüche 9-15, **dadurch gekennzeichnet, dass** der Polyester- und/oder Esteranteil ein Polyester aus einem C36-Diol und/oder Adipinsäure und/oder Sebazinsäure und/oder C36-Dimerfettsäure und/oder Terephthalsäure ist.

18. Polyamidformmasse nach einem der vorhergehenden Ansprüche, **dadurch gekennzeichnet, dass** das transparente Polyesteramid einen Glasübergangspunkt, welcher vom Ester- oder Polyesteranteil und bevorzugt einer daraus gebildeten amorphen Phase herrührt, von weniger als 20°C, bevorzugt von weniger als - 20°C aufweist.

19. Polyamidformmasse nach einem der vorhergehenden Ansprüche, **dadurch gekennzeichnet, dass** das transparente Polyesteramid wenigstens ein amorphes oder mikrokristallines Hartsegment enthält, wobei solche amorphen oder mikrokristallinen Polyamid-Hartsegmente vorzugsweise eine zahlenmittlere Molmasse im Bereich von 500 bis 5000 g/mol besitzen, bevorzugt im Bereich von 700 bis 4000 g/mol und ganz besonders bevorzugt im Bereich von 750 bis 3000 g/mol.

20. Polyamidformmasse nach Anspruch 19, **dadurch gekennzeichnet, dass** das mikrokristalline Polyamid-Hartsegment über eine Glasübergangstemperatur oberhalb von wenigstens 50°C, bevorzugt von mehr als 80°C und insbesondere bevorzugt von mehr als 100 °C und/oder über eine Schmelztemperatur von wenigstens 120°C, bevorzugt von wenigstens 135°C und insbesondere von wenigstens 150°C verfügt.

21. Polyamidformmasse nach Anspruch 19, **dadurch gekennzeichnet, dass** das amorphe Polyamid-Hartsegment über eine Glasübergangstemperatur oberhalb von wenigstens 50°C, bevorzugt von mehr als 80 °C und insbesondere bevorzugt von mehr als 100 °C verfügt.

22. Polyamidformmasse nach einem der vorhergehenden Ansprüche, **dadurch gekennzeichnet, dass** das weitere Polymer ein Polyamid auf Basis von aliphatischen und/oder cycloaliphatischen Diaminen und aliphatischen und/oder aromatischen Dicarbonsäuren mit 6 bis 40, bevorzugt mit 6-36, insbesondere bevorzugt mit 10, 12, 14 oder 18 Kohlenstoffatomen handelt, oder eine Mischung solcher Homopolyamide und/oder Copolyamide, und/oder um ein Polyamid Blockcopolymeres mit Weichsegmenten, und/oder ausgewählt aus der folgenden Gruppe ist: Polyester mit Weichsegmenten; TPU-Elastomere mit Weichsegmenten; Acrylatpolymer; Methacrylatpolymer, insbesondere bevorzugt mit langen Seitengruppen; Polycarbonat-Copolymer; Styrol-Copolymer, bevorzugt auf Basis von Acrylnitril, Butadien, Acrylester, Methacrylester; Polyolefin, insbesondere gepfropftes; Ethylencopolymere, insbesondere auf Basis von Propen, Buten, Penten, Hexen, Octen, Decen, Undecen, Butadien, Styrol, Acrylnitril, Isopren, Isobutylen, Derivaten der (Meth)acrylsäure, Vinylacetat, Tetrafluorethylen, Vinylidenfluorid, Hexafluorpropen und 2-Chlorbutadien; Polyisobutylen; Polybutylacrylat sowie Kombinationen und Mischungen davon.

23. Polyamidformmasse nach einem der vorhergehenden Ansprüche, **dadurch gekennzeichnet, dass** es sich beim weiteren Polymer um ein Homopolyamid ausgewählt aus der Gruppe MACM12, MACM14, MACM 18 und/oder um ein Copolyamid ausgewählt aus der Gruppe MACM12/PACM12, MACM14/PACM14, MACM18/PACM18 handelt und/oder um ein Homopolyamid und/oder Copolyamid auf Basis von aromatischen Dicarbonsäuren mit 8 bis 18 Kohlenstoffatomen oder eine Mischung solcher Homopolyamide und/oder Copolyamide, bevorzugt auf Basis von Lactamen und/oder Aminocarbonsäuren, wobei es sich bei den aromatischen Dicarbonsäuren bevorzugt um TPS und/oder IPS handelt.

24. Polyamidformmasse nach Anspruch 23, **dadurch gekennzeichnet, dass** es sich beim transparenten Homopolyamid und/oder Copolyamid um ein Polyamid ausgewählt aus der Gruppe: 6I/6T, TMDT, 6I/MACMI/MACMT, 6I/6T/MACMI, MACMI/MACM36, 6I, 12/PACMI, 12/MACMI, 12/MACMT, 12/MACM12, 6/PACMT, 6/6I, 6/IPDT oder eine Mischung davon handelt

25. Polyamidformmasse nach einem der vorhergehenden Ansprüche, **dadurch gekennzeichnet, dass** das weitere Polymer, insbesondere in Form eines transparenten, bevorzugt amorphen oder mikrokristallinen Homopolyamids und/oder Copolyamids, eine Lösungsviskosität ($\eta_{rel}$) zwischen 1.3 und 2.0, insbesondere bevorzugt zwischen 1.40 und 1.85, aufweist und/oder einen Glasübergangspunkt $T_g$ oberhalb von 90°C, bevorzugt oberhalb von 110°C, insbesondere bevorzugt oberhalb von 130°C.

26. Polyamidformmasse nach einem der vorhergehenden Ansprüche, **dadurch gekennzeichnet, dass** es sich beim photochromen Farbstoff um einen Farbstoff handelt, welcher reversibel mit UV oder kurzwelligem VIS anregbar ist, wobei es sich bevorzugt um einen Farbstoff auf Basis von Spirooxazinen handelt.

27. Polyamidformmasse nach einem der vorhergehenden Ansprüche, **dadurch gekennzeichnet, dass** es sich bei den Additiven um Stabilisatoren wie UV-Stabilisatoren, Hitzestabilisatoren, Radikalfänger und/oder um Verarbeitungshilfsstoffe, Weichmacher, weitere Polymere und/oder um funktionelle Additive bevorzugt zur Beeinflussung optischer Eigenschaften wie insbesondere des Brechungsindexes oder um Kombinationen oder Mischungen davon handelt.

28. Polyamidformmasse nach einem der vorhergehenden Ansprüche, **dadurch gekennzeichnet, dass** sie Polyamid-12 enthält, vorzugsweise niederviskoses Polyamid-12.

29. Polyamidformmasse nach einem der vorhergehenden Ansprüche, **dadurch gekennzeichnet, dass** das Verhältnis der Lösungsviskositäten ($\eta_{rel}$) des weiteren transparenten Polymers und des Polyesteramids kleiner 1.2, insbesondere kleiner 1.1 ist.

30. Transparenter Gegenstand mit wenigstens einem Bereich oder einer Schicht aus einer Polyamidformmasse nach einem der vorhergehenden Ansprüche, wobei der Gegenstand eine Lichttransmission von wenigstens 80% im Bereich von 500 bis 700 nm aufweist, wenn der Bereich oder die Schicht 2mm Dicke aufweist.

31. Gegenstand nach dem vorhergehenden Anspruch für hochwertige optische Anwendungen, **dadurch gekennzeichnet, dass** er bei einer Schichtdicke der Schicht aus der Polyamidformmasse von 2 mm eine Transmission von mehr als 80%, bevorzugt von mehr als 85%, in Wellenlängenbereich von 500-700 nm aufweist, und/oder einen Haze von weniger als 10 bevorzugt von weniger als 8.

32. Gegenstand nach Anspruch 30 oder 31, **dadurch gekennzeichnet, dass** es sich um eine Folie, ein Profil, ein Rohr, einen Hohlkörper oder einen optisch variablen Filter oder eine optische Linse handelt, bevorzugt um eine ophthalmische Linse insbesondere bevorzugt um ein Element mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen, oder um ein Dekorationselement oder ein Strukturelement wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

33. Gegenstand nach einem der Ansprüche 30 - 32, **dadurch gekennzeichnet, dass** der Gegenstand gradientengefärbt ist und/oder eine photochrome Beschichtung, eine Antireflexionsbeschichtung, eine Kratzschutzbeschichtung, eine optische Filterbeschichtung, eine polarisierende Beschichtung, eine Sauerstoffbarrierebeschichtung oder Kombinationen solcher Beschichtungen aufweist.

34. Gegenstand nach einem der Ansprüche 30 -33, **dadurch gekennzeichnet, dass** der Bereich oder die Schicht aus der Polyamidformmasse einen Glasübergangspunkt oberhalb von 50°C, bevorzugt oberhalb von 80°C, insbesondere bevorzugt oberhalb von 100°C und/oder eine Schmelztemperatur von oberhalb 120°C, bevorzugt oberhalb von 135°C, insbesondere bevorzugt von 150°C, aufweist.

35. Verfahren zur Herstellung eines Gegenstandes nach einem der Ansprüche 30-34, **dadurch gekennzeichnet, dass** eine Polyamidformmasse nach einem der Ansprüche 1 - 29 in einem Extrusionsverfahren, einem Spritzgussverfahren oder einem Hinterspritzen zum Gegenstand geformt wird, wobei der photochrome Farbstoff ggf. in einem nachgeschalteten Tauchbadverfahren und/oder Thermotransferverfahren in die Mischung aus transparentem Polyesteramid und weiterem Polymer eingebracht werden kann, und wobei es sich beim photochromen Gegenstand auch um eine Folie handeln kann, welche auf einen Träger, bevorzugt eine optische Linse, durch Hinterspritzen, Kaschieren, Laminieren oder Kleben aufgebracht werden kann.

36. Verfahren zur Herstellung eines massegefärbten Formteiles nach einem der Ansprüche 30-34 **dadurch gekennzeichnet, dass** der photochrome Farbstoff zusammen mit dem Polyesteramid und dem weiteren Polymer compoundiert wird, wobei der Farbstoff in Form eines flüssigen Konzentrates mit Hilfe einer Dosierpumpe der Polymerschmelze aus Polyesteramid und weiterem Polymer zugesetzt werden kann und/oder der Farbstoff als Feststoff oder Flüssigkeit auf den übrigen Komponenten aufgetrommelt wird, wobei gegebenenfalls zusätzlich noch Anrollhilfsstoffe zum Einsatz kommen können.

**37.** Verfahren zur Herstellung eines Masse gefärbten Formteiles nach Anspruch 35, **dadurch gekennzeichnet, dass** der Farbstoff und das Polyesteramid und/oder weitere Polymer zu einem Masterbatch mit hoher Farbkonzentration von bevorzugt bis 30% verarbeitet wird, und dieser Masterbatch in der erforderlichen Menge mit dem Polyesteramid und/oder weiteren Polymer in einem Extruder zu Granulat verarbeitet wird oder direkt in der Spritzgussmaschine in das fertige Formteil übergeführt wird.

**Claims**

**1.** A polyamide molding composition comprising
at least one transparent polyesteramide in a proportion by weight of from 70 to 99.99% by weight;
at least one further polymer in a proportion by weight of from 0 to 30% by weight;
at least one photochromic dye in a proportion by weight of from 0.01 to 2% by weight;
and also optionally
further dyes and/or additives
wherein the transmittance of the transparent polyesteramide, of the further polymer and of the polyamide molding composition is at least 80% in the range from 200 to 800 nm, when the polyesteramide in pure form, the molding composition in pure form or the polyamide molding composition take the form of a thin plaque of thickness 2 mm.

**2.** The polyamide molding composition as claimed in claim 1, wherein at least one polyesteramide is composed of a polyamide fraction making up from 40 to 95% by weight and of an ester fraction and/or polyester fraction making up from 5 to 60% by weight, where the arrangement of the polyamide units and polyester units as repeat units in the polyesteramide can be random, alternating, or blockwise.

**3.** The polyamide molding composition as claimed in any of the preceding claims, wherein the transmittance of the polyesteramide and/or of the further polymer and/or of the polyamide molding composition is at least 85%, preferably greater than 88%, wherein the transparent polyesteramide, the further polymer and the polyamide molding composition, respectively, show such a transmittance in the range from 200 to 800 nm, when the polyesteramide in pure form, the molding composition in pure form or the polyamide molding composition take the form of a thin plaque of thickness 2 mm.

**4.** The polyamide molding composition as claimed in any of the preceding claims, wherein the haze of the polyesteramide and/or of the further polymer and/or of the polyamide molding composition is at most 10%, preferably at most 8%, particularly preferably at most 5% measured according to ASTM 1003 at a layer thickness of 2 mm.

**5.** The polyamide molding composition as claimed in any of the preceding claims, wherein the proportion by weight present of the at least one transparent polyesteramide is from 80 to 99.9% by weight, preferably from 90 to 99.9% by weight, particularly preferably from 95 to 99.9% by weight, and it is particularly preferable that there is only one such transparent polyesteramide present.

**6.** The polyamide molding composition as claimed in any of the preceding claims, which comprises no further polymer.

**7.** The polyamide molding composition as claimed in any of the preceding claims, wherein the solution viscosity ($\eta_{rel}$) of the polyesteramide in m-cresol, 0.5% by weight, at 20°C, is from 1.3 to 2.5, particularly preferably from 1.4 to 2.3, and/or its modulus of elasticity is less than 2000 MPa, preferably less than 1200 MPa, particularly preferably less than 500 MPa.

**8.** The polyamide molding composition as claimed in any of the preceding claims, wherein the glass transition temperature of the further polymer is above 90°C and its transmittance is more than 85%.

**9.** The polyamide molding composition as claimed in any of the preceding claims, wherein the transparent polyesteramide is a polyesteramide based on at least one polyamide based on dicarboxylic acids and on diamines, and/or on lactams and/or on aminocarboxylic acids, and based on at least one polyester fraction and/or ester fraction based on a diol and on a dicarboxylic acid.

**10.** The polyamide molding composition as claimed in claim 9, wherein the at least one dicarboxylic acid has been selected from the group of: aliphatic C4-C44 diacid, cycloaliphatic C8-C20 diacid, aromatic diacid, preferably TPA, IPA, or NDA, or else a mixture or combination thereof.

**11.** The polyamide molding composition as claimed in claim 10, wherein the at least one dicarboxylic acid has been selected from the group of: adipic acid, sebacic acid, dodecanedioic acid, terephthalic acid, isophthalic acid, cyclohexanedicarboxylic acid, and mixtures thereof.

**12.** The polyamide molding composition as claimed in any of claims 9 to 11, wherein the diamine has been selected from the group of: branched or unbranched aliphatic C4-C18 diamine, cycloaliphatic C8-C20 diamine, polyoxyalkylenediamines (C2-C4-alkylene), diamine having an aromatic ring, preferably MXDA or PXDA, and also mixtures or combinations thereof, where, if polyoxyalkylenediamines are present, their concentration, based on the entire polyester fraction or ester fraction, is preferably at most 75% by weight, in particular at most 50% by weight.

**13.** The polyamide molding composition as claimed in claim 12, wherein the diamine has been selected from the group of: methylpentanediamine, hexanediamine, methyloctanediamine, nonanediamine, decanediamine, dodecanediamine, m-xylylenediamine, MACM, PACM.

**14.** The polyamide molding composition as claimed in any of claims 9 to 13, wherein the at least one lactam or the at least one aminocarboxylic acid has been selected from the group of: caprolactam, laurolactam, aminocaproic acid, aminolauric acid, aminoundecanoic acid.

**15.** The polyamide molding composition as claimed in claim 9, wherein the transparent polyesteramide is a polyesteramide based on a polyamide system, selected from the group of: PA6, PA66, PA610, PA612, PA6/12, PA1010, PA11, PA12, PA MACM6-18, PA PACM6-18, MACM6-18/PACM6-18, a copolyamide involving 6T, 9T, 10T, and/or 12T units, and mixtures and/or combinations thereof.

**16.** The polyamide molding composition as claimed in any of claims 9 to 15, wherein the diol has been selected from the group of: aliphatic C2-C36 diol, cycloaliphatic C6-C36 diol, C8-C36 diol having an aromatic ring, a diol containing ether groups, polycaprolactonediol, or a combination thereof, particularly preferably being selected from the group of: ethanediol, propanediol, butanediol, hexanediol, cyclohexanedimethanol, C36 dimer fatty diol, polyoxyalkylenediols (C2-C4-alkylene), in particular with a molar mass in the range from 200 to 2000 g/mol, polycaprolactonediol with a molar mass in the range from 500 to 3000 g/mol, particularly preferably from 750 to 2000 g/mol, and also combinations thereof, where, if polyoxyalkylenediols are present, their concentration, based on the entire polyester fraction or ester fraction, is preferably at most 75% by weight, in particular at most 50% by weight.

**17.** The polyamide molding composition as claimed in any of claims 9 to 15, wherein the polyester fraction and/or ester fraction is a polyester composed of a C36 diol and/or adipic acid and/or sebacic acid and/or C36 dimer fatty acid and/or terephthalic acid.

**18.** The polyamide molding composition as claimed in any of the preceding claims, wherein the glass transition temperature, deriving from the ester fraction or polyester fraction and preferably from an amorphous phase formed therefrom, of the transparent polyesteramide is below 20°C, preferably below or equal to -20°C.

**19.** The polyamide molding composition as claimed in any of the preceding claims, wherein the transparent polyesteramide contains at least one amorphous or microcrystalline hard segment, where the number-average molar mass of these amorphous or microcrystalline polyamide hard segment is preferably in the range from 500 to 5000 g/mol, with preference in the range from 700 to 4000 g/mol and very particularly preferably in the range from 750 to 3000 g/mol.

**20.** The polyamide molding composition as claimed in claim 19, wherein the glass transition temperature of the microcrystalline polyamide hard segment is above at least 50°C, preferably more than 80°C and particularly preferably more than 100°C, and/or its melting point is at least 120°C, preferably at least 135°C and in particular at least 150°C.

**21.** The polyamide molding composition as claimed in claim 19, wherein the glass transition temperature of the amorphous polyamide hard segment is above at least 50°C, preferably more than 80°C and particularly preferably more than 100°C.

**22.** The polyamide molding composition as claimed in any of the preceding claims, wherein the further polymer is a polyamide based on aliphatic and/or cycloaliphatic diamines and on aliphatic and/or aromatic dicarboxylic acids having from 6 to 40, preferably from 6 to 36, particularly preferably 10, 12, 14, or 18, carbon atoms, or is a mixture of homopolyamides and/or copolyamides of this type, and/or is a polyamide block copolymer having soft segments, and/or has been selected from the following group: polyester having soft segments; TPU elastomers having soft segments; acrylate polymer; methacrylate polymer, particularly preferably having long pendant groups; polycarbonate copolymer; styrene copolymer, preferably based on acrylonitrile, butadiene, acrylate, methacrylate; polyolefin, in particular grafted polyolefin; ethylene copolymers, in particular based on propene, butene, pentene, hexene, octene, decene, undecene, butadiene, styrene, acrylonitrile, isoprene, isobutylene, derivatives of (meth)acrylic acid, vinyl acetate, tetrafluoroethylene, vinylidene fluoride, hexafluoropropene, and 2-chlorobutadiene; polyisobutylene; polybutyl acrylate, and also combinations and mixtures thereof.

23. The polyamide molding composition as claimed in any of the preceding claims, wherein the further polymer is a homopolyamide selected from the group of MACM12, MACM14, MACM 18, and/or is a copolyamide selected from the group of MACM12/PACM12, MACM14/PACM14, MACM18/PACM18, and/or is a homopolyamide and/or copolyamide based on aromatic dicarboxylic acids having from 8 to 18 carbon atoms, or is a mixture of homopolyamides and/or copolyamides of this type, preferably based on lactams and/or aminocarboxylic acids, where the aromatic dicarboxylic acids are preferably TPA and/or IPA.

24. The polyamide molding composition as claimed in claim 23, wherein the transparent homopolyamide and/or copolyamide is a polyamide selected from the group of: 6I/6T, TMDT, 6I/MACMI/MACMT, 6I/6T/MACMI, MACMI/MACM36, 6I, 12/PACMI, 12/MACMI, 12/MACMT, 12/MACM12, 6/PACMT, 6/6I, 6/IPDT, or a mixture thereof.

25. The polyamide molding composition as claimed in any of the preceding claims, wherein the solution viscosity ($\eta_{rel}$) of the further polymer, in particular in the form of a transparent, preferably amorphous or microcrystalline homopolyamide and/or copolyamide, is from 1.3 to 2.0, particularly preferably from 1.40 to 1.85, and/or its glass transition temperature Tg is above 90°C, preferably above 110°C, particularly preferably above 130°C.

26. The polyamide molding composition as claimed in any of the preceding claims, wherein the photochromic dye is a dye which is reversibly excitable by UV or short-wave VIS, preferably being a dye based on spirooxazines.

27. The polyamide molding composition as claimed in any of the preceding claims, wherein the additives are stabilizers, such as UV stabilizers, heat stabilizers, or free-radical scavengers, and/or are processing aids, plasticizers, or further polymers, and/or are functional additives, preferably for influencing optical properties, such as in particular the refractive index, or are a combination or mixture thereof.

28. The polyamide molding composition as claimed in any of the preceding claims, which comprises nylon-12, preferably low-viscosity nylon-12.

29. The polyamide molding composition as claimed in any of the preceding claims, wherein the ratio of the solution viscosities ($\eta_{rel}$) of the further transparent polymer and of the polyesteramide is smaller than 1.2, in particular smaller than 1.1.

30. A transparent, preferably haze-free article with at least one region or one layer composed of a polyamide molding composition as claimed in any of the preceding claims, wherein the article has a transmission of at least 80% in the range of 500-700 nm if the region or the layer has a thickness of 2 mm.

31. The article as claimed in the preceding claim, for high-specification optical applications, whose haze is less than 10, preferably less than 8, and whose transmittance is more than 80%, preferably more than 85%, in the wavelength range from 500-700 nm, when the layer thickness of the layer composed of the polyamide molding composition is 2 mm.

32. The article as claimed in claim 30 or 31, which is a foil, a profile, a tube, a hollow body, or an optically variable filter, or an optical lens, and which is preferably an ophthalmic lens, particularly preferably an element with spectral filter action, e.g. in the form of a spectacle lens, sun lens, corrective lens, or optical filter, or in the form of a switching assembly for optical signal processing, ski goggles, visor, safety spectacles, photorecording, display, optical data storage, or windows of buildings and of vehicles, or is a decorative element or a structural element, for example in the form of a spectacle frame, toy, or cover, particularly in the form of a mobile-telephone case, a part of electronic devices, a coating, particularly of packaging, of decorative items, of sports equipment, or of cladding, preferably in the automobile sector.

33. The article as claimed in any of claims 30 to 32, which has a color gradient and/or has a photochromic coating, an antireflective coating, a scratch-resistant coating, an optical filter coating, a polarizing coating, an oxygen-barrier coating, or a combination of these coatings.

34. The article as claimed in any of claims 30 to 33, wherein the glass transition temperature of the region or the layer composed of the polyamide molding composition is above 50°C, preferably above 80°C, particularly preferably above 100°C, and/or its melting point is above 120°C, preferably above 135°C, particularly preferably being 150°C.

35. A process for the production of an article as claimed in any of claims 30 to 34, which comprises molding a polyamide molding composition as claimed in any of claims 1 to 29 in an extrusion process, in an injection-molding process, or in an in-mold-coating process, to give the article, where the photochromic dye can, if appropriate, be introduced in a downstream dip-coat-bath process and/or thermal transfer process into the mixture composed of transparent polyesteramide and of further polymer, and where the photochromic article can also be a foil which can be applied to a substrate, preferably an optical lens, via in-mold-coating, lamination, or adhesive bonding.

36. A process for the production of a bulk-colored molding as claimed in any of claims 30 to 34, which comprises compounding the photochromic dye together with the polyesteramide and with the further polymer, where the dye can be added in the form of a liquid concentrate to the polymer melt composed of polyesteramide and of further polymer with the aid of a metering pump, and/or the dye is applied in the form of solid or liquid to the other components in a drum mixer, and where use may also, if appropriate, be made of aids to a rolling application process.

37. The process for the production of a bulk-colored molding as claimed in claim 35, wherein the dye and the polyesteramide and/or the further polymer is processed to give a masterbatch with high color concentration, preferably up to 30%, and the required amount of said masterbatch is processed with the polyesteramide and/or with the further polymer in an extruder to give pellets or is directly converted in the injection-molding machine to the finished molding.


**Revendications**

1. Matériau de moulage polyamide, contenant :

   au moins un polyester-amide transparent en une proportion en poids de 70 à 99,99 % en poids ;
   au moins un autre polymère en une proportion en poids de 0 à 30 % en poids ;
   au moins un colorant photochrome en une proportion en poids de 0,01 à 2 % en poids ;
   et éventuellement
   d'autres colorants et/ou additifs,

   le polyester-amide transparent, l'autre polymère et le matériau de moulage présentant une transmission de la lumière d'au moins 80 % dans la plage allant de 500 à 700 nm lorsque le polyester-amide se présente sous forme pure, l'autre polymère sous forme pure ou le matériau de moulage polyamide sous la forme d'une plaquette mince de 2 mm d'épaisseur.

2. Matériau de moulage polyamide selon la revendication 1, **caractérisé en ce qu'**au moins un polyester-amide se compose d'une proportion de polyamide de 40 à 95 % en poids et d'une proportion d'ester et/ou de polyester de 5 à 60 % en poids, les unités polyamide et polyester pouvant être agencées statistiquement, en alternance ou en séquence dans le polyester-amide en tant qu'unités de répétition.

3. Matériau de moulage polyamide selon l'une quelconque des revendications précédentes, **caractérisé en ce que** le polyester-amide et/ou l'autre polymère et/ou le matériau de moulage polyamide présentent une transmission d'au moins 85 %, de préférence de plus de 88 %, le polyester-amide transparent, l'autre polymère et le matériau de moulage présentant une telle transmission de la lumière dans la plage allant de 500 à 700 nm lorsque le polyester-amide se présente sous forme pure, l'autre polymère sous forme pure ou le matériau de moulage polyamide sous la forme d'une plaquette mince de 2 mm d'épaisseur.

4. Matériau de moulage polyamide selon l'une quelconque des revendications précédentes, **caractérisé en ce que** le polyester-amide et/ou l'autre polymère et/ou le matériau de moulage polyamide présentent un trouble d'au plus 10 %, de préférence d'au plus 8 %, de manière particulièrement préférée d'au plus 5 %, déterminé selon ASTM 1003 à une épaisseur de couche de 2 mm.

**5.** Matériau de moulage polyamide selon l'une quelconque des revendications précédentes, **caractérisé en ce que** ledit au moins un polyester-amide transparent est présent en une proportion en poids de 80 à 99,9 % en poids, de préférence de 90 à 99,9 % en poids, de manière particulièrement préférée de 95 à 99,9 % en poids, seul un tel polyester-amide transparent unique étant de manière particulièrement préférée présent.

**6.** Matériau de moulage polyamide selon l'une quelconque des revendications précédentes, **caractérisé en ce que** le matériau de moulage polyamide ne contient pas d'autre polymère.

**7.** Matériau de moulage polyamide selon l'une quelconque des revendications précédentes, **caractérisé en ce que** le polyester-amide présente une viscosité en solution ($\eta_{rel}$) dans le m-crésol, 0,5 % en poids, à 20 °C, comprise entre 1,3 et 2,5, de manière particulièrement préférée comprise entre 1,4 et 2,3, et/ou un module E de moins de 2 000 MPa, de préférence de moins de 1 200 MPa, de manière particulièrement préférée de moins de 500 MPa.

**8.** Matériau de moulage polyamide selon l'une quelconque des revendications précédentes, **caractérisé en ce que** l'autre polymère présente une température de transition vitreuse supérieure à 90 °C et une transmission de plus de 85 %.

**9.** Matériau de moulage polyamide selon l'une quelconque des revendications précédentes, **caractérisé en ce que** le polyester-amide transparent est un polyester-amide à base d'au moins un polyamide à base d'acides dicarboxyliques et de diamines, et/ou de lactames et/ou d'acides aminocarboxyliques, et à base d'au moins une fraction polyester et/ou ester à base d'un diol et d'un acide dicarboxylique.

**10.** Matériau de moulage polyamide selon la revendication 9, **caractérisé en ce que** ledit au moins un acide dicarboxylique est choisi dans le groupe constitué par : un diacide en C4-C44 aliphatique, un diacide en C8-C20 cycloaliphatique, un diacide aromatique, de préférence le TPS, l'IPS, le NDS, ainsi que leurs mélanges ou combinaisons.

**11.** Matériau de moulage polyamide selon la revendication 10, **caractérisé en ce que** ledit au moins un acide dicarboxylique est choisi dans le groupe constitué par : l'acide adipique, l'acide sébacique, le diacide dodécanoïque, l'acide téréphtalique, l'acide isophtalique, l'acide cyclohexanedicarboxylique et leurs mélanges.

**12.** Matériau de moulage polyamide selon l'une quelconque des revendications 9 à 11, **caractérisé en ce que** la diamine est choisie dans le groupe constitué par : une diamine en C4-C18 aliphatique ramifiée ou non ramifiée, une diamine en C8-C20 cycloaliphatique, les polyoxyalkylène-diamines (alkylènes en C2-C4), une diamine à noyau aromatique, de préférence la MXDA, la PXDA, ainsi que leurs mélanges et combinaisons ; en présence de polyoxyalkylène-diamines, leur concentration, par rapport à la proportion totale de polyester ou d'ester, étant de préférence d'au plus 75 % en poids, notamment d'au plus 50 % en poids.

**13.** Matériau de moulage polyamide selon la revendication 12, **caractérisé en ce que** la diamine est choisie dans le groupe constitué par : la méthylpentane-diamine, l'hexane-diamine, la méthyloctane-diamine, la nonane-diamine, la décane-diamine, la dodécane-diamine, la m-xylylène-diamine, la MACM, la PACM.

**14.** Matériau de moulage polyamide selon l'une quelconque des revendications 9 à 13, **caractérisé en ce que** ledit au moins un lactame ou ledit au moins un acide aminocarboxylique est choisi dans le groupe constitué par : le caprolactame, le laurine-lactame, l'acide aminocaproïque, l'acide aminolaurique, l'acide aminoundécanoïque.

**15.** Matériau de moulage polyamide selon la revendication 9, **caractérisé en ce que** le polyester-amide transparent est un polyester-amide à base d'un système polyamide choisi dans le groupe constitué par : le PA6, le PA66, le PA610, le PA612, le PA6/12, le PA11, le PA12, le PA MACM6-18, le PA PACM6-18, le MACM6-18/PACM6-18, un copolyamide incluant des unités 6T, 9T, 10T et/ou 12T, ainsi que leurs mélanges et/ou combinaisons.

**16.** Matériau de moulage polyamide selon l'une quelconque des revendications 9 à 15, **caractérisé en ce que** le diol est choisi dans le groupe constitué par : un diol en C2-C36 aliphatique, un diol en C6-C36 cycloaliphatique, un diol en C8-C36 à noyau aromatique, un diol contenant des groupes éther, un polycaprolactame-diol ou leurs combinaisons, de manière particulièrement préférée choisi dans le groupe constitué par : l'éthane-diol, le propane-diol, le butane-diol, l'hexane-diol, le cyclohexane-diméthanol, un diol gras dimère en C36, les polyoxyalkylène diols (alkylène en C2-C4), notamment ayant une masse molaire dans la plage allant de 200 à 2 000 g/mol, le polycaprolactone-diol ayant une masse molaire dans la plage allant de 500 à 3 000 g/mol, de manière particulièrement préférée de 750 à 2 000 g/mol, ainsi que leurs combinaisons ; en présence de polyoxyalkylène diols, leur concentration, par rapport à la proportion totale de polyester ou d'ester étant de préférence d'au plus 75 % en poids, notamment d'au plus 50 % en poids.

**17.** Matériau de moulage polyamide selon l'une quelconque des revendications 9 à 15, **caractérisé en ce que** la fraction polyester et/ou ester est un polyester d'un diol en C36 et/ou d'acide adipique et/ou d'acide sébacique et/ou d'un acide gras dimère en C36 et/ou d'acide téréphtalique.

**18.** Matériau de moulage polyamide selon l'une quelconque des revendications précédentes, **caractérisé en ce que** le polyester-amide transparent présente une température de transition vitreuse, qui provient de la fraction ester ou polyester et de préférence d'une phase amorphe formée par celle-ci, de moins de 20 °C, de préférence de moins de -20 °C.

**19.** Matériau de moulage polyamide selon l'une quelconque des revendications précédentes, **caractérisé en ce que** le polyester-amide transparent contient au moins un segment dur amorphe ou microcristallin, de tels segments durs de polyamide amorphes ou microcristallins présentant de préférence une masse molaire moyenne en nombre dans la plage allant de 500 à 5 000 g/mol, de préférence dans la plage allant de 700 à 4 000 g/mol et de manière tout particulièrement préférée dans la plage allant de 750 à 3 000 g/mol.

**20.** Matériau de moulage polyamide selon la revendication 19, **caractérisé en ce que** le segment dur de polyamide microcristallin présente une température de transition vitreuse supérieure à au moins 50 °C, de préférence de plus de 80 °C et de manière particulièrement préférée de plus de 100 °C, et/ou une température de fusion d'au moins 120 °C, de préférence d'au moins 135 °C et notamment d'au moins 150 °C.

**21.** Matériau de moulage polyamide selon la revendication 19, **caractérisé en ce que** le segment dur de polyamide amorphe présente une température de transition vitreuse supérieure à au moins 50 °C, de préférence de plus de 80 °C et de manière particulièrement préférée de plus de 100 °C.

**22.** Matériau de moulage polyamide selon l'une quelconque des revendications précédentes, **caractérisé en ce que** l'autre polymère est un polyamide à base de diamines aliphatiques et/ou cycloaliphatiques et d'acides dicarboxyliques aliphatiques et/ou aromatiques de 6 à 40, de préférence de 6 à 36, de manière particulièrement préférée de 10, 12, 14 ou 18 atomes de carbone, ou un mélange de tels homopolyamides et/ou copolyamides, et/ou un copolymère séquencé de polyamide contenant des segments souples, et/ou est choisi dans le groupe suivant : les polyesters contenant des segments souples ; les élastomères de TPU contenant des segments souples ; un polymère d'acrylate ; un polymère de méthacrylate, de manière particulièrement préférée à groupes latéraux longs ; un copolymère de polycarbonate ; un copolymère de styrène, de préférence à base d'acrylonitrile, de butadiène, d'ester acrylique, d'ester méthacrylique ; une polyoléfine, notamment greffée ; les copolymères d'éthylène, notamment à base de propène, butène, pentène, hexène, octène, décène, undécène, butadiène, styrène, acrylonitrile, isoprène, isobutylène, dérivés de l'acide (méth)acrylique, acétate de vinyle, tétrafluoroéthylène, fluorure de vinylidène, hexafluoropropène et 2-chlorobutadiène ; le polyisobutylène ; le polyacrylate de butyle, ainsi que leurs combinaisons et mélanges.

**23.** Matériau de moulage polyamide selon l'une quelconque des revendications précédentes, **caractérisé en ce que** l'autre polymère est un homopolyamide choisi dans le groupe constitué par MACM12, MACM14, MACM18 et/ou un copolyamide choisi dans le groupe constitué par MACM12/PACM12, MACM14/PACM14, MACM18/PACM18, et/ou un homopolyamide et/ou copolyamide à base d'acides dicarboxyliques aromatiques de 8 à 18 atomes de carbone ou un mélange de tels homopolyamides et/ou copolyamides, de préférence à base de lactames et/ou d'acides aminocarboxyliques, les acides dicarboxyliques aromatiques étant de préférence le TPS et/ou l'IPS.

**24.** Matériau de moulage polyamide selon la revendication 23, **caractérisé en ce que** l'homopolyamide et/ou le copolyamide transparent est un polyamide choisi dans le groupe constitué par : 6I/6T, TMDT, 6I/MACMI/MACMT, 6I/6T/MACMI, MACMI/MACM36, 6I, 12/PACMI, 12/MACMI, 12/MACMT, 12/MACM12, 6/PACMT, 6/6I, 6/IPDT ou un mélange de ceux-ci.

**25.** Matériau de moulage polyamide selon l'une quelconque des revendications précédentes, **caractérisé en ce que** l'autre polymère, notamment sous la forme d'un homopolyamide et/ou copolyamide transparent, de préférence amorphe ou microcristallin, présente une viscosité en solution ($\eta_{rel}$) comprise entre 1,3 et 2,0, de manière particulièrement préférée entre 1,40 et 1,85, et/ou une température de transition vitreuse Tg supérieure à 90 °C, de préférence supérieure à 110 °C, de manière particulièrement préférée supérieure à 130 °C.

**26.** Matériau de moulage polyamide selon l'une quelconque des revendications précédentes, **caractérisé en ce que** le colorant photochrome est un colorant qui est excitable de manière réversible avec des rayonnements UV ou VIS à longueur d'onde courte, de préférence un colorant à base de spirooxazines.

**27.** Matériau de moulage polyamide selon l'une quelconque des revendications précédentes, **caractérisé en ce que** les additifs sont des stabilisateurs tels que des stabilisateurs UV, des stabilisateurs thermiques, des capteurs de radicaux et/ou des adjuvants d'usinage, des plastifiants, d'autres polymères et/ou des additifs fonctionnels, de préférence pour influencer les propriétés optiques, telles que notamment l'indice de réfraction, ou des combinaisons ou mélanges de ceux-ci.

**28.** Matériau de moulage polyamide selon l'une quelconque des revendications précédentes, **caractérisé en ce qu'**il contient du polyamide 12, de préférence du polyamide 12 faiblement visqueux.

**29.** Matériau de moulage polyamide selon l'une quelconque des revendications précédentes, **caractérisé en ce que** le rapport entre les viscosités en solution ($\eta_{rel}$) de l'autre polymère transparent et du polyester-amide est inférieur à 1,2, notamment inférieur à 1,1.

**30.** Article transparent comprenant au moins une zone ou une couche en un matériau de moulage polyamide selon l'une quelconque des revendications précédentes, l'article présentant une transmission de la lumière d'au moins 80 % dans la plage allant de 500 à 700 nm lorsque la zone ou la couche est de 2 mm d'épaisseur.

**31.** Article selon la revendication précédente pour applications optiques de grande valeur, **caractérisé en ce qu'**il présente à une épaisseur de couche de la couche en le matériau de moulage polyamide de 2 mm une transmission de plus de 80 %, de préférence de plus de 85 %, dans la plage de longueurs d'onde allant de 500 à 700 nm, et/ou un trouble de moins de 10, de préférence de moins de 8.

**32.** Article selon la revendication 30 ou 31, **caractérisé en ce qu'**il s'agit d'un film, d'un profilé, d'un tube, d'un corps creux ou d'un filtre optiquement variable ou d'une lentille optique, de préférence d'une lentille ophtalmique, de manière particulièrement préférée d'un élément à action de filtration spectrale, tel que par exemple un verre de lunettes, une lentille solaire, une lentille correctrice, un filtre optique et une unité de commutation pour le traitement de signaux optiques, des lunettes de ski, une visière, des lunettes de protection, un enregistrement photographique, un écran, un stockage de données optique, une fenêtre de bâtiments et d'automobiles, ou d'un élément décoratif ou d'un élément structural tel que par exemple une monture de lunettes, un jouet, une couverture, notamment un boîtier de téléphone portable, une partie d'appareils électroniques, un revêtement, notamment d'emballages, des articles décoratifs, des appareils de sport, des habillements, de préférence dans le domaine automobile.

**33.** Article selon l'une quelconque des revendications 30 à 32, **caractérisé en ce que** l'article est coloré selon un gradient et/ou comprend un revêtement photochrome, un revêtement anti-réflectif, un revêtement anti-éraflure, un revêtement de filtration optique, un revêtement polarisant, un revêtement de barrière à l'oxygène ou des combinaisons de tels revêtements.

**34.** Article selon l'une quelconque des revendications 30 à 33, **caractérisé en ce que** la zone ou la couche en le matériau de moulage polyamide présente une température de transition vitreuse supérieure à 50 °C, de préférence supérieure à 80 °C, de manière particulièrement préférée supérieure à 100 °C, et/ou une température de fusion supérieure à 120 °C, de préférence supérieure à 135 °C, de manière particulièrement préférée supérieure à 150 °C.

**35.** Procédé de fabrication d'un article selon l'une quelconque des revendications 30 à 34, **caractérisé en ce qu'**un matériau de moulage polyamide selon l'une quelconque des revendications 1 à 29 est façonné en l'article par un procédé d'extrusion, un procédé de moulage par injection ou une contre-injection, le colorant photochrome pouvant éventuellement être introduit dans le mélange de polyester-amide transparent et de l'autre polymère par un procédé à bain d'immersion et/ou un procédé de thermotransfert en aval, et l'article photochrome pouvant également être un film qui peut être appliqué sur un support, de préférence une lentille optique, par contre-injection, masquage, stratification ou collage.

**36.** Procédé de fabrication d'une pièce moulée colorée en masse selon l'une quelconque des revendications 30 à 34, **caractérisé en ce que** le colorant photochrome est mélangé conjointement avec le polyester-amide et l'autre polymère, le colorant pouvant être ajouté sous la forme d'un concentré liquide à l'aide d'une pompe de dosage à la masse fondue polymère du polyester-amide et de l'autre polymère, et/ou le colorant étant mélangé par un tambour sous forme solide ou liquide avec les autres composants, des adjuvants de roulement pouvant en outre éventuellement être utilisés.

37. Procédé de fabrication d'une pièce moulée colorée en masse selon la revendication 35, **caractérisé en ce que** le colorant et le polyester-amide et/ou l'autre polymère sont transformés en un mélange maître de concentration en colorant élevée de préférence de jusqu'à 30 %, et ce mélange maître est transformé en un granulat en la quantité nécessaire avec le polyester-amide et/ou l'autre polymère dans une extrudeuse, ou directement transféré dans la pièce moulée finie dans la machine de moulage par injection.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 63027837 A
- JP 01180536 A
- JP 01024740 A
- WO 0149478 A
- WO 2005030856 A
- US 20070045596 A
- US 6667099 B
- EP 1712581 A
- EP 0922731 A
- DE 19642885 A
- DE 10224947 A
- DE 10122188 A
- CH 688624 A
- EP 0725100 A
- DE 19820661 C1
- DE 3622871 A
- EP 0313941 A

**In der Beschreibung aufgeführte Nicht-Patentliteratur**

- Definition Photochromie. Römpp Lexikon Chemie. Georg Thieme Verlag, 3303
- **J.F. RABEK.** Mechanisms of Photophysical Processes and Photochemical Reactions in Polymers. 377-391
- Chromogenic Materials, Photochromic. Kirk-Othmer Encyclopedia of Chemical Technology. John Wiley and Sons, Inc, vol. 6, 587-605
- Photochromism: Molecules and Systems. Elsevier, 2003